# EUROPÄISCHE PATENTSCHRIFT

(11) **EP 3 170 295 B1**
(45) Veröffentlichungstag und Bekanntmachung des Hinweises auf die Patenterteilung: **10.04.2019**
(21) Anmeldenummer: 15741141.4
(22) Anmeldetag: 14.07.2015
(51) Int. Cl.: H04L 29/06

(54) **ERHÖHEN DER SICHERHEIT BEIM PORT-KNOCKING DURCH EXTERNE COMPUTERSYSTEME**
INCREASING THE SECURITY FOR PORT-KNOCKING PERFORMED BY EXTERNAL COMPUTER SYSTEMS
AUGMENTER LA SECURITÉ DE PORT-KNOCKING RÉALISÉ PAR DES SYSTÈMES D'ORDINATEURS EXTERIEURS

(30) Priorität: 15.07.2014 DE 102014109906
(43) Veröffentlichungstag der Anmeldung: 24.05.2017
(73) Patentinhaber: Fujitsu Technology Solutions Intellectual Property GmbH, 80807 München (DE)
(72) Erfinder: CLAES, Heinz-Josef, 61130 Nidderau (DE)
(74) Vertreter: Epping - Hermann - Fischer
(86) Internationale Anmeldenummer: PCT/EP2015/066072
(87) Internationale Veröffentlichungsnummer: WO 2016/008889

(56) Entgegenhaltungen:
- EP-A1- 2 448 171
- EP-A1- 2 772 856
- GREEN M L ET AL: "Grid-Enabled Virtual Organization Based Dynamic Firewall", GRID COMPUTING, 2004. PROCEEDINGS. FIFTH IEEE/ACM INTERNATIONAL WORKSH OP ON PITTSBURGH, PA, USA 08-08 NOV. 2004, PISCATAWAY, NJ, USA,IEEE, 8. November 2004 (2004-11-08), Seiten 208-216, XP010769500, DOI: 10.1109/GRID.2004.35 ISBN: 978-0-7695-2256-2
- Barry Rhodes ET AL: "On Securing the Public Health Information Network Messaging System", Proceedings of the 4th Annual PKI R&D Workshop "Multiple Paths to Trust", 1. August 2005 (2005-08-01), Seiten 194-201, XP55191980, ISBN: 978-1-88-684338-7 Gefunden im Internet: URL:http://csrc.nist.gov/publications/nist ir/ir7224/NISTIR-7224.pdf [gefunden am 2015-05-28]

## Beschreibung

Die Erfindung betrifft ein Verfahren zum Freischalten externer Computersysteme für eine Kommunikation mit abgesicherten Bearbeitungs-Computersystemen in einer Computernetz-Infrastruktur, ein verteiltes Rechnernetz mit einer Computernetz-Infrastruktur und zumindest einem externen Computersystem, sowie ein Computerprogramm-Produkt zur Durchführung eines entsprechenden Verfahrens.

Verteilte Rechnernetze beschreiben eine Mehrzahl von Computersystemen, die über Datenverbindungen in Computernetz-Infrastrukturen organisiert miteinander kommunizieren können. Anwendung finden verteilte Rechnernetze beispielsweise in Computernetz-Infrastrukturen, welche Server-Client-Topologien umfassen, wobei zum Teil vertrauliche Daten, z. B. Kundendaten oder Benutzerdaten, zwischen einem Client und einem Server ausgetauscht werden und wobei ein Zugriff Dritter auf diese Daten unterbunden werden muss.

In abgesicherten Computernetz-Infrastrukturen sind Bearbeitungs-Computersysteme, auf denen (vertrauliche) Daten verarbeitet werden, speziell abgesichert. Beispielsweise können vorbestimmte Netzwerk-Ports der Bearbeitungs-Computersysteme zunächst geschlossen sein, so dass über Netzwerk ein Zugriff beziehungsweise Verbindungsaufbau zu einem jeweiligen Bearbeitungs-Computersystem nicht möglich ist.

Herkömmliche Lösungen sehen hier vor, vorbestimmte Anklopf-Signale über Netzwerk an ein Bearbeitungs-Computersystem mit derart geschlossenen Netzwerk-Ports zu senden (so genanntes Port-Knocking), wobei eine vorbestimmte Daten-Sequenz vorbestimmte Netzwerk-Ports des Bearbeitungs-Computersystems anspricht. Diese Daten-Sequenz wird mit einer vorbestimmten Sequenz im Bearbeitungs-Computersystem verglichen, wobei das Bearbeitungs-Computersystem im Erfolgsfall einen oder mehrere Netzwerk-Ports öffnet, um einen Verbindungsaufbau von außen über Netzwerk zu erlauben.

Solche herkömmlichen Lösungen werden zum Beispiel in den Artikeln "Grid-Enabled Virtual Organization Based Dynamic Firewall" von Mark L. Green et al (von IEEE am 8. November 2004 veröffentlicht) und "On Securing the Public Health Information Network Messaging System" von Barry Rhodes et al (vom US Department of Commerce am 1. August 2005 unter "4th Annual PKI R&D Workshop "Multiple Paths to Trust" Proceedings" veröffentlicht) vorgestellt oder sind auch Gegenstand der Druckschrift EP2448171 A1.

Eine Gefahr dieser Maßnahmen besteht darin, dass ein Bearbeitungs-Computersystem somit für Angreifer (Cracker) beziehungsweise nicht-autorisierte Computersysteme, welche einen entsprechenden Port-Knocking-Prozess manipulieren, geöffnet wird. Auf diese Weise ist ein (manipulativer) Zugriff Dritter auf unter Umständen vertrauliche Daten im Bearbeitungs-Computersystem mittels der geöffneten Netzwerk-Ports möglich. Ferner ist für eine Ansprechbarkeit von Diensten im geöffneten Bearbeitungs-Computersystem ein laufendes Programm an einem oder mehreren Netzwerk-Ports des Bearbeitungs-Computersystems erforderlich. Dieses laufende Programm stellt eine potentielle Sicherheitslücke für Angriffe von außen (z. B. über Buffer-Overflow oder so genannte Denial-of-Service-Attacken, DOS) über Netzwerk dar.

Eine explizite Authentifizierung eines externen Computersystems direkt an einem Bearbeitungs-Computersystem innerhalb der Computernetz-Infrastruktur für einen Zugriff scheidet bei herkömmlichen Lösungen aus, weil ein Bearbeitungs-Computersystem - wie oben erläutert - zunächst vermittels geschlossener Netzwerk-Ports keinen Verbindungsaufbau von außen zulässt.

Umgekehrt gestaltet sich ein Ansprechen eines externen Computersystems, welches einen Zugriff auf ein Bearbeitungs-Computersystem verlangt, vom Bearbeitungs-Computersystem aus oftmals als schwierig oder gar unmöglich, weil das externe Computersystem unter Umständen selbst abgesichert ist und womöglich für einen Verbindungsaufbau nicht ansprechbar ist.

Zudem erfolgt ein Zugriff auf Bearbeitungs-Computersysteme innerhalb einer Computernetz-Infrastruktur meist über das Internet oder ein separates Intranet (z. B. für eine Freischaltung von Applikationen), wobei sich derartige Zugriffe dadurch auszeichnen, dass die auf die Computernetz-Infrastruktur (z. B. Rechenzentrum) zugreifenden externen Computersysteme über einen privaten Zugang kommen, der keine (eindeutige) öffentliche IP-Adresse verwendet. Beispiele hierfür sind kaskadierte Anbindungen über einen Proxy oder mittels so genannter NAT/PAT-Maskierungs-Verfahren (NAT = Network Adress Translation, PAT = Port Adress Translation).

Dies führt dazu, dass grundsätzlich keine Verbindung von einem Bearbeitungs-Computersystem innerhalb der Computernetz-Infrastruktur auf das entsprechende externe Computersystem initiiert werden kann, weil das Bearbeitungs-Computersystem schlichtweg die exakte IP-Adresse des externen Computersystems aufgrund der Maskierung der IP-Adresse nicht kennt. Ferner ist die IP-Adresse gewöhnlich privat und nicht direkt in einem Routing verwendbar. Zudem ist sie gewöhnlich in der Kommunikation hinter einer Firewall abgesichert.

Die Aufgabe der vorliegenden Erfindung besteht darin, durch technische Maßnahmen eine gesicherte Freischaltung externer Computersysteme für eine Kommunikation mit abgesicherten Bearbeitungs-Computersystemen innerhalb einer Computernetz-Infrastruktur zu ermöglichen und dennoch den Schutz vor Angriffen auf entsprechende Computersysteme in der Computernetz-Infrastruktur zu verbessern.

In einem ersten Aspekt wird diese Aufgabe durch ein Verfahren nach Anspruch 1 gelöst.

Bei dem Verfahren werden zum Freischalten externer Computersysteme für eine Kommunikation mit abgesicherten Bearbeitungs-Computersystemen in einer Computernetz-Infrastruktur die folgenden Schritte vorgeschlagen.

Zunächst wird ein Authentifizierungs-Paket von einem externen Computersystem, welches außerhalb der Computernetz-Infrastruktur eingerichtet ist, an ein Vermittlungs-Computersystem innerhalb der Computernetz-Infrastruktur übertragen. Das Authentifizierungs-Paket enthält signierte Informationen zur Authentifizierung des externen Computersystems.

Das Authentifizierungs-Paket wird automatisiert vom Vermittlungs-Computersystem an zumindest ein Bearbeitungs-Computersystem innerhalb der Computernetz-Infrastruktur übertragen. Das Bearbeitungs-Computersystem hält zumindest vorübergehend vorbestimmte Netzwerk-Ports geschlossen, so dass ein Zugriff auf das Bearbeitungs-Computersystem über Netzwerk vermittels dieser Netzwerk-Ports verhindert wird. Jedoch kann das Bearbeitungs-Computersystem auf das Vermittlungs-Computersystem zugreifen, um das Authentifizierungs-Paket vom Vermittlungs-Computersystem abzuholen. Dieser Vorgang kann über ein gemeinsames Zugangsnetz zwischen dem Vermittlungs-Computersystem und dem Bearbeitungs-Computersystem oder über ein hierzu vorgesehenes spezielles Verbindungsnetz zwischen dem Vermittlungs-Computersystem und dem Bearbeitungs-Computersystem erfolgen.

Ferner erfolgt ein Freischalten zumindest eines selektiven Netzwerk-Ports durch das Bearbeitungs-Computersystem für eine Kommunikation mit dem externen Computersystem und ein nachfolgendes Aufbauen einer Verbindung zum selektiv freigeschalteten Netzwerk-Port des Bearbeitungs-Computersystems durch das externe Computersystem.

Bei dem erläuterten Verfahren sind initial alle vorbestimmten Netzwerk-Ports des Bearbeitungs-Computersystems geschlossen. Das Bearbeitungs-Computersystem verhält sich somit als eingekapseltes (speziell abgesichertes) System. Ein Zugriff über ein Netzwerk auf das Bearbeitungs-Computersystem ist zumindest unter bestimmten Betriebsbedingungen (vorteilhaft dauerhaft während der Durchführung des hier erläuterten Verfahrens ohne gezielte Freischaltung) nicht oder nur deutlich erschwert möglich.

Der Begriff "vorbestimmte Netzwerk-Ports" bedeutet, dass im Bearbeitungs-Computersystem sämtliche oder nur ausgewählte sicherheitskritische Netzwerk-Ports, z. B. die für dieses Verfahren verwendeten Netzwerk-Ports, dauerhaft (diese werden gemäß dem erläuterten Verfahren nie freigeschaltet) oder vorübergehend (diese können selektiv gemäß dem erläuterten Verfahren freigeschaltet werden) geschlossen sind.

Dies hat den Vorteil, dass auf dem Bearbeitungs-Computersystem für ein Freischalten einer Kommunikation mit einem externen Computersystem initial keine Programme oder Dienste eingerichtet beziehungsweise verfügbar sind, die zum Zwecke der Ansprechbarkeit beziehungsweise des Verbindungsaufbaus von außen die entsprechenden Netzwerk-Ports abhören (so genanntes "Listening") und somit eine potentielle Sicherheitslücke (z. B. für Buffer-Overflow oder DoS-Attacken bzw. sog. distributed DoS-Attacken) bilden. Somit bedeutet der Begriff "geschlossene Netzwerk-Ports" in diesem Kontext, dass diese keine "Listening Ports" sind, das heißt, (ohne verfahrensgemäße autorisierte Freischaltung) kein Verbindungsaufbau von außen zugelassen wird. Ein Dritter (Cracker) ist in diesem Fall nicht in der Lage, sich von außen über Netzwerk am Bearbeitungs-Computersystem zu authentifizieren oder einzuloggen, z. B. bei Unix-basierten Systemen über einen Secure-Shell-(SSH-)-Daemon, einen http-Daemon oder sonstige Dienste/Applikation usw., oder spezielle Aktionen auf dem Bearbeitungs-Computersystem durchzuführen.

Allerdings kann für eine vorbestimmte Benutzergruppe ein lokaler Zugriff auf das Bearbeitungs-Computersystem eingerichtet sein (z. B. für ein Sicherheitspersonal). Für andere Dritte wird jedoch ein lokaler Zugriff auf das Bearbeitungs-Computersystem verhindert.

Durch die generelle Abschottung des Bearbeitungs-Computersystems gemäß der erläuterten Art und Weise ist somit ein Angriff über Netzwerk erschwert, weil eine entscheidende Angriffsmöglichkeit, nämlich laufende Dienste oder Programme an geöffneten ("Listening") Netzwerk-Ports der jeweiligen Systeme unterbunden sind. Somit sind bei dem erläuterten Verfahren insbesondere sicherheitskritische Daten, welche lokal auf dem Bearbeitungs-Computersystem verarbeitet werden, gegen Angriffe geschützt.

Zum Freischalten einer Kommunikation zwischen dem externen Computersystem außerhalb der Computernetz-Infrastruktur und dem Bearbeitungs-Computersystem innerhalb der Computernetz-Infrastruktur erlaubt das Verfahren im Unterschied zum Bearbeitungs-Computersystem einen Zugriff von außerhalb der Computernetz-Infrastruktur auf das zumindest eine Vermittlungs-Computersystem innerhalb der Computernetz-Infrastruktur. Das Vermittlungs-Computersystem ist als "offenes" System mit wenigstens einem ansprechenbaren offenen ("Listening") Netzwerk-Port über Netzwerk zugänglich. Das bedeutet, dass auf dem Vermittlungs-Computersystem beispielsweise Programme laufen und/oder Applikationen (Dienste) vorbereitet sind, so dass das Bearbeitungs-Computersystem innerhalb der Computernetz-Infrastruktur oder das externe Computersystem außerhalb der Computernetz-Infrastruktur jeweils auf das Vermittlungs-Computersystem zugreifen können und eine Verbindung zum Vermittlungs-Computersystem aufbauen können, um Datenpakete (über eine dann aufgebaute Verbindung, "Established") im Vermittlungs-Computersystem abzulegen oder von dort abzuholen. Unter Sicherheitsaspekten ist ein solches "offenes" Vermittlungs-Computersystem ähnlich zu bewerten wie ein traditionelles, speziell abgesichertes Computersystem.

Somit dient das Vermittlungs-Computersystem als (abgesicherter, aber ansprechbarer) Vermittler für eine Kommunikation zwischen dem Bearbeitungs-Computersystem und dem externen Computersystem.

Vorteilhaft erfolgt ein Verbindungsaufbau vom Bearbeitungs-Computersystem auf das Vermittlungs-Computersystem innerhalb der Computernetz-Infrastruktur über ein internes Netzwerk, welches beispielsweise als "Virtual Private Network" (VPN) oder Secure-Shell-Netzwerk (SSH) oder als eine Kombination davon abgesichert ist. Alternativ oder ergänzend können auch speziell zu diesem Zweck entwickelte Protokolle eingesetzt werden.

Ein Verbindungsaufbau vom externen Computersystem außerhalb der Computernetz-Infrastruktur auf das Vermittlungs-Computersystem innerhalb der Computernetz-Infrastruktur erfolgt beispielsweise über Internet oder über ein Routing von einem separaten Intranet aus (z. B. ein Client-Intranet). Beispielsweise kann das externe Computersystem ein Client sein, der hinter einem NAT- und/oder PAT-Router sitzt. Dabei erfolgt ein Verbindungsaufbau zum Vermittlungs-Computersystem von einem lokalen Client-Intranet über eine private Quell-IP-Adresse des Clients aus, welche im Router mit einer öffentlichen IP-Adresse des Routers maskiert wird.

Gemäß dem erläuterten Verfahren muss für eine Freischaltung des externen Computersystems für eine Kommunikation mit dem zunächst abgesicherten Bearbeitungs-Computersystem innerhalb der Computernetz-Infrastruktur eine Authentifizierung des externen Computersystems am Vermittlungs-Computersystem erfolgen. Das Authentifizierungs-Paket enthält vorteilhaft signierte Informationen über das externe Computersystem. Diese können gegebenenfalls Informationen über einen anzusprechenden Dienst oder allgemein Prozess auf dem Bearbeitungs-Computersystem umfassen, welcher vom externen Computersystem angesprochen werden soll.

Eine Signierung der Informationen im Authentifizierungs-Paket hat den Vorteil, dass eine Manipulation des Authentifizierungs-Paketes erschwert wird. Auf diese Weise kann eine im Vergleich zu herkömmlichen Port-Knocking-Prozessen (siehe oben) deutlich sicherere Authentifizierung externer Computersysteme zum Freischalten einer Kommunikation mit Bearbeitungs-Computersystemen innerhalb einer abgesicherten Computernetz-Infrastruktur durchgeführt werden.

Das Authentifizierungs-Paket, welches vom externen Computersystem an das von außen ansprechbare Vermittlungs-Computersystem übertragen worden ist, wird im weiteren Verfahren um die für das Vermittlungs-Computersystem (und damit auch für das Bearbeitungs-Computersystem) sichtbare IP-Adresse, die dem externen Computersystem zuordenbar ist, ergänzt. Diese IP-Adresse kann z.B. diejenige eines NAT-Routers sein, von dem das Vermittlungs-Computersystem das Authentifizierungs-Paket unmittelbar erhalten hat. Anschließend wird das so ergänzte Authentifizierungs-Paket vom Vermittlungs-Computersystem an das Bearbeitungs-Computersystem übermittelt.

Da das Bearbeitungs-Computersystem zunächst - wie oben erläutert - seine Netzwerk-Ports geschlossen hält und keinen Verbindungsaufbau von außen zulässt, wird zum Übertragen des Authentifizierungs-Paketes auf das Bearbeitungs-Computersystem ein Prozess angestoßen, wobei das Bearbeitungs-Computersystem selbst das Vermittlungs-Computersystem über Netzwerk anspricht und eine Verbindung zum Vermittlungs-Computersystem aufbaut. Das Authentifizierungs-Paket kann im Weiteren im Vermittlungs-Computersystem aufgerufen und automatisiert über eine hergestellte Verbindung ("Established") vom Vermittlungs-Computersystem auf das Bearbeitungs-Computersystem übertragen werden. Vorteilhaft ist das automatisierte Übertragen so ausgestaltet, dass ein Dritter von außen darauf keine Einflussmöglichkeiten hat und somit eine Gefahr von Manipulationen der ausgetauschten Daten oder eines der beteiligten Computersysteme deutlich erschwert bzw. ausgeschlossen ist.

Nach erfolgreicher Authentifizierung vermittels des Authentifizierungs-Paketes erfolgt eine Freischaltung zumindest eines Netzwerk-Ports im Bearbeitungs-Computersystem. Der Begriff "Freischaltung" bedeutet in diesem Kontext eine Freigabe der (Quell-)IP-Adresse, welche in dem Authentifizierungs-Paket hinterlegt ist, selektiv an einem vorbestimmten Ziel-Netzwerk-Port des Bearbeitungs-Computersystems für einen Verbindungsaufbau und eine anschließende Kommunikation zu und mit dem Bearbeitungs-Computersystem (über einen aus einer Vielzahl von Quell-Netzwerk-Ports in Kombination mit der Quell-IP-Adresse). Nach dem Freischalten zumindest eines selektiven Netzwerk-Ports durch das Bearbeitungs-Computersystem erfolgt schließlich ein Aufbauen einer Verbindung (neue Session) zum selektiv freigeschalteten Netzwerk-Port des Bearbeitungs-Computersystems durch das externe Computersystem via der freigeschalteten IP-Adresse und einem bestimmten Quell-Netzwerk-Port.

Es ist vorteilhaft, einen entsprechenden Verbindungsaufbau nur in einem vorbestimmten Zeitrahmen, der unter Umständen applikationsabhängig entsprechend kurz sein kann (z. B. je nach Netzwerkgeschwindigkeit einige Millisekunden oder einige Sekunden, z.B. bis zu 10 Sekunden), zuzulassen. Erfolgt in dem vorgegebenen Zeitrahmen kein entsprechender Verbindungsaufbau durch das externe Computersystem, so wird der selektiv freigeschaltete Netzwerk-Port des Bearbeitungs-Computersystems aus Sicherheitsgründen wieder geschlossen, um die Gefahr eines missbräuchlichen Verbindungsaufbaus oder die manipulative Ausnutzung des geöffneten Netzwerk-Ports (z.B. vermittels eines Port-Scannings) durch Computersysteme mit der (zufällig) selben IP-Adresse, die z.B. hinter demselben NAT-Router sitzen, zu reduzieren.

Eine Anwendung des vorliegenden Verfahrens ist beispielsweise ein Freischalten einer Applikation auf dem Bearbeitungs-Computersystem für einen externen Client, welcher über Internet eine gezielte (und in gewissem Rahmen dennoch beschränkte und abgesicherte) Freischaltung des Bearbeitungs-Computersystems innerhalb der Computernetz-Infrastruktur anfragt.

Der generelle Vorteil des hier erläuterten Verfahrens besteht darin, dass ein unsicheres und angreifbares Öffnen von Netzwerk-Ports am Bearbeitungs-Computersystem auf eine manipulierbare Anfrage eines externen Computersystems hin (z.B. via Port-Knocking) vermieden wird. Darüber hinaus muss/kann das Bearbeitungs-Computersystem keine Verbindung nach außerhalb der Computernetz-Infrastruktur aufbauen, um eine Authentifizierung einer (zunächst) unbekannten Quelle durchzuführen. Ferner wird verhindert, dass das Bearbeitungs-Computersystem eine Verbindung nach außen zulässt, ohne zu wissen, ob das Gegenüber überhaupt vertrauenswürdig ist. Vor einer Authentifizierung eines externen Computersystems erfolgt lediglich eine abgesicherte Kommunikation mit dem internen Vermittlungs-Computersystem innerhalb der Computernetz-Infrastruktur seitens des Bearbeitungs-Computersystems zum Abholen einer Authentifizierungs-Datei, die vom externen Computersystem auf das Vermittlungs-Computersystem übertragen worden ist. Erst nach erfolgreicher Authentifizierung erfolgt ein gezieltes Freischalten einer (Quell-)IP-Adresse für eine Kommunikation mit dem externen Computersystem.

Vorteilhaft wird nach dem Aufbauen einer Verbindung zum selektiv freigeschalteten Ziel-Netzwerk-Port des Bearbeitungs-Computersystems, über die die nachfolgende Kommunikation mit dem externen Computersystem läuft, folgender zusätzlicher Schritt durchgeführt:
- Begrenzen der Kommunikation zwischen dem Bearbeitungs-Computersystem und dem externen Computersystem auf den freigeschalteten Ziel-Netzwerk-Port des Bearbeitungs-Computersystems und einen Netzwerk-Port des externen Computersystems, der dem Bearbeitungs-Computersystem als Quell-Netzwerk-Port durch die aufgebaute Verbindung bekannt ist. Bei diesen Maßnahmen ist zu berücksichtigen, dass ggf. parallel stattfindende Verbindungsaufbauten mehrerer Computersysteme sich nicht gegenseitig beeinträchtigen.

Eine Begrenzung auf den selektiven Quell-Netzwerk-Port des externen Computersystems hat den Vorteil, dass anderweitige Kommunikationen unterbunden werden. So kann das externe Computersystem nur eingeschränkt auf einzelne Netzwerk-Ports (auf beiden Seiten), also Quell-Netzwerk-Port des externen Computersystems und Ziel-Netzwerk-Port des Bearbeitungs-Computersystems, mit dem Bearbeitungs-Computersystem kommunizieren. Der selektive Netzwerk-Port des externen Computersystems kann beispielsweise der Quell-Netzwerk-Port der letzten Übertragung vermittels der aufgebauten ("Established") Verbindung sein. Falls beispielsweise das externe Computersystem hinter einem NAT-Router sitzt, wird verhindert, dass nicht-autorisierte Systeme oder Angreifer, welche ebenfalls hinter dem NAT-Router sitzen, neben der bereits hergestellten Verbindung zwischen dem externen Computersystem und dem Bearbeitungs-Computersystem eine weitere Verbindung zum Bearbeitungs-Computersystem (via derselben Quell-IP-Adresse und einem anderen Quell-Netzwerk-Port des NAT-Routers) aufbauen können und somit nichtautorisierten Zugriff auf das Bearbeitungs-Computersystem erhalten. Die vorgenannten Maßnahmen erlauben somit eine gezielte Beschränkung eines Zugriffs auf das Bearbeitungs-Computersystem über eine autorisierte (einzelne) Netzwerk-Verbindung. Andere nicht-autorisierte Verbindungen beziehungsweise deren Aufbauversuche werden im Bearbeitungs-Computersystem verworfen beziehungsweise nicht berücksichtigt.

Vorteilhaft werden nach dem Aufbauen einer Verbindung zum selektiv freigeschalteten Netzwerk-Port des Bearbeitungs-Computersystems durch das externe Computersystem folgende Schritte durchgeführt:
- Übertragen eines Verifikations-Paketes durch das externe Computersystem unmittelbar auf das Bearbeitungs-Computersystem vermittels der aufgebauten Verbindung und
- Bestätigen der Informationen des durch das Vermittlungs-Computersystem zuvor übertragenen Authentifizierungs-Paketes durch Verifikations-Informationen im Verifikations-Paket.

Durch Senden eines Verifikations-Paketes kann sichergestellt werden, dass die Verbindung von der richtigen autorisierten Instanz (und nicht durch einen unbefugten Dritten, z. B. mit gleicher IP-Adresse hinter einem NAT-Router oder mit manipulierter IP-Adresse oder mit gestohlenem Authentifizierungs-Paket) aufgebaut worden ist. Durch die vorgenannten Maßnahmen kann somit sichergestellt werden, dass nach einem Freischalten einer im Authentifizierungs-Paket hinterlegten IP-Adresse an einem selektiven Ziel-Netzwerk-Port des Bearbeitungs-Computersystems diejenige externe Instanz auch die Verbindung zum Bearbeitungs-Computersystem aufbaut, die eine entsprechende Verbindung über das Authentifizierungs-Paket zuvor angezeigt hat.

Der obige Schritt des Bestätigens der Informationen des Authentifizierungs-Paketes durch Verifikations-Informationen im Verifikations-Paket kann ein Überprüfen auf Identität mit dem Authentifizierungs-Paket umfassen. Dabei wird sichergestellt, dass keine Manipulationen am ursprünglich übertragenen Authentifizierungs-Paket vorgenommen werden.

Alternativ oder ergänzend kann das Bestätigen der Informationen ein notwendiges Hinterlegen von bestimmten Autorisierungs- oder Identitätsmerkmalen im Verifikations-Paket umfassen, die im Bearbeitungs-Computersystem anhand von hinterlegten Vergleichs-Informationen überprüft und bestätigt werden. Derartige Autorisierungs- oder Identitätsmerkmale können z.B. Merkmale der Hardware des externen Computersystems, biometrische Merkmale bestimmter Benutzer des externen Computersystems sowie Passwörter (Passphrasen oder Credentials, Schlüssel, usw.) umfassen.

Vorteilhaft umfasst das Verfahren der erläuterten Art den zusätzlichen Schritt:
- Überprüfen des Authentifizierungs-Paketes im Bearbeitungs-Computersystem, wobei das Freischalten des zumindest einen selektiven Netzwerk-Ports durch das Bearbeitungs-Computersystem für die Kommunikation mit dem externen Computersystem nur erfolgt, falls das Überprüfen des Authentifizierungs-Paketes erfolgreich war.

Vorteilhaft umfasst das Verfahren alternativ und/oder ergänzend zum Überprüfen des Authentifizierungs-Paketes im Bearbeitungs-Computersystem die zusätzlichen Schritte:
- Überprüfen des Authentifizierungs-Paketes im Vermittlungs-Computersystem und
- Verwerfen des Authentifizierungs-Paketes durch das Vermittlungs-Computersystem, falls das Überprüfen nicht erfolgreich war.

Ein Überprüfen des Authentifizierungs-Paketes im Bearbeitungs-Computersystem und/oder im Vermittlungs-Computersystem auf Gültigkeit stellt eine Sicherheitsmaßnahme dar, wobei vordefinierte Informationen im Authentifizierungs-Paket erfüllt sein müssen, so dass das Authentifizierungs-Paket als gültig verifiziert werden kann und ein Freischalten des Bearbeitungs-Computersystems auslöst.

Ein Überprüfen des Authentifizierungs-Paketes bereits im Vermittlungs-Computersystem stellt eine vorgreifliche Sicherheits-Maßnahme vor dem Übertragen auf das Bearbeitungs-Computersystem dar. Ein Verwerfen eines ungültigen Authentifizierungs-Paketes kann gegebenenfalls durch ein Monitoring protokolliert werden. Nach Verwerfen erfolgt vorteilhaft der Abbruch des Verfahrens. Anderenfalls erfolgt die Übertragung des Authentifizierungs-Paketes an das Bearbeitungs-Computersystem wie oben erläutert.

Vorteilhaft enthält das Authentifizierungs-Paket eine Signatur eines (separaten) Key-Computersystems und/oder eine Signatur des externen Computersystems. Ein separates Key-Computersystem ist dabei eine zusätzliche Sicherheits-Instanz. Eine Signatur des Key-Computersystems verhindert eine Manipulation des Authentifizierungs-Paketes im externen Computersystem. Private Schlüssel (Passphrasen, Credentials, etc.) zum Erstellen der jeweiligen Signatur sind lediglich lokal auf dem Key-Computersystem bzw. dem externen Computersystem hinterlegt, jedoch vorteilhaft nicht auf den sonstigen Computersystemen, die am Verfahren beteiligt sind, bekannt. Als zusätzliche Sicherheitsmaßnahme kann das Authentifizierungs-Paket mit einem öffentlichen Schlüssel des externen Computersystems (bzw. dessen Nutzer) und/oder des Key-Computersystems verschlüsselt sein.

Durch signierte Informationen im Authentifizierungs-Paket, die über eine Signatur eines separaten Key-Computersystems signiert worden sind, wird die Sicherheit des Authentifizierungs-Prozesses innerhalb des erläuterten Verfahrens erhöht. Beispielsweise kann durch einen Sicherheitsbeauftragten, der Zugriff auf das Key-Computersystem hat, ein vorbestimmtes externes Computersystem für ein Freischalten einer Kommunikation mit dem zunächst abgesicherten Bearbeitungs-Computersystem innerhalb der Computernetz-Infrastruktur festgelegt werden. Diese Information wird durch einen privaten Schlüssel des Sicherheitsbeauftragten lokal im Key-Computersystem signiert und anschließend daraus das Authentifizierungs-Paket erstellt.

Vorteilhaft können weitere vorbestimmte Durchführungsparameter in diesem (oben erläuterten) Key-Computersystem oder in einem weiteren Key-Computersystem für einen Zugriff des externen Computersystems auf das Bearbeitungs-Computersystem festgelegt werden. Derartige Durchführungsparameter können vom entsprechenden Key-Computersystem an das externe Computersystem übertragen werden, wobei das Authentifizierungs-Paket im externen Computersystem auf Grundlage der festgelegten Durchführungsparameter erstellt wird. Beispielsweise kann das Authentifizierungs-Paket die durch das Key-Computersystem festgelegten Durchführungsparameter unmittelbar enthalten. Derartige weitere Durchführungsparameter stellen eine zusätzliche Sicherheits-Maßnahme dar, die vorgibt, welche externen Computersysteme unter welchen Umständen in welchem Rahmen eine Freischaltung auf einem Bearbeitungs-Computersystem innerhalb der Computernetz-Infrastruktur erhalten sollen oder dürfen.

Die letztgenannten Durchführungsparameter können ebenfalls mit wenigstens einem privaten Schlüssel durch das Key-Computersystem signiert sein. Vorteilhaft werden sämtliche Signaturen und/oder Durchführungsparameter, die im Authentifizierungs-Paket hinterlegt sind, im Bearbeitungs-Computersystem und/oder im Vermittlungs-Computersystem gemäß den oben erläuterten Maßnahmen überprüft. Dadurch wird sichergestellt, dass ein Freischalten des externen Computersystems auf dem Bearbeitungs-Computersystem durch das Key-Computersystem als Sicherheits-Instanz autorisiert ist.

Alle vorgenannten Maßnahmen sind selbstverständlich auch auf das Verifikations-Paket anwendbar, das zur Bestätigung des Authentifizierungs-Paketes unmittelbar vom externen Computersystem an das Bearbeitungs-Computersystem geschickt wird, wie dies oben im Zusammenhang mit weiteren Verfahrensschritten und Maßnahmen erläutert worden ist.

Vorteilhaft umfasst das Übertragen des Authentifizierungs-Paketes vom Vermittlungs-Computersystem auf das Bearbeitungs-Computersystem die folgenden Schritte:
- Senden einer vorbestimmten Daten-Sequenz vom Vermittlungs-Computersystem oder vom externen Computersystem an das Bearbeitungs-Computersystem, wobei die vorbestimmten Netzwerk-Ports des Bearbeitungs-Computersystems geschlossen sind und wobei die Sequenz in einer vorbestimmten Reihenfolge einen oder mehrere Netzwerk-Ports des Bearbeitungs-Computersystems anspricht,
- Überprüfen der gesendeten Daten-Sequenz auf Übereinstimmung mit einer vordefinierten Sequenz im Bearbeitungs-Computersystem, sowie
- Veranlassen des Übertragens des Authentifizierungs-Paketes durch das Bearbeitungs-Computersystem, falls die Überprüfung der gesendeten Sequenz positiv ist.

Die Maßnahmen haben den Vorteil, dass grundsätzlich die (für das Verfahren maßgeblichen) Netzwerk-Ports des Bearbeitungs-Computersystems - in oben erläutertem Sinne - initial geschlossen sind und einen Verbindungsaufbau zum Bearbeitungs-Computersystem von außen blockieren beziehungsweise einen manipulativen Zugriff deutlich erschweren. Für sämtliche externen Computersysteme, die sich nicht über entsprechende Authentifizierungs-Pakete, wie oben erläutert, innerhalb der Computernetz-Infrastruktur authentifiziere können, hat das Bearbeitungs-Computersystem dauerhaft (bis auf eine kurze Zeitspanne, in der eine bestimmte Quell-IP-Adresse gemäß den obigen Schritten freigeschaltet ist) geschlossene Netzwerk-Ports und blockiert jeglichen Verbindungsaufbau.

Das Veranlassen des Übertragens des Authentifizierungs-Paketes vermittels des Bearbeitungs-Computersystems zur Authentifizierung eines freizuschaltenden externen Computersystems kann ein automatisierter Prozess zum Übertragen des Authentifizierungs-Paketes auf das Bearbeitungs-Computersystem (z. B. über den Unix-basierten Befehl "Secure copy", scp) sein. Gemäß dem Prozess baut das Bearbeitungs-Computersystem seinerseits eine Verbindung zum Vermittlungs-Computersystem auf und holt das Authentifizierungs-Paket ab. Dieser Prozess kann durch das Bearbeitungs-Computersystem gestartet werden, nachdem eine vorbestimmte Daten-Sequenz an das Bearbeitungs-Computersystem gesendet wurde, falls diese Daten-Sequenz mit einer vordefinierten Sequenz übereinstimmt. Das Sequenz-sendende Computersystem kann das Vermittlungs-Computersystem oder alternativ das externe Computersystem sein. Die IP-Adresse des Sequenz-sendenden Computersystems kann dabei statisch im Bearbeitungs-Computersystem vorgegeben oder dynamisch aus den dem Kernel des Bearbeitungs-Computersystems bekannten Quell-IP-Adressen möglicher Sequenz-sendender Computersysteme entnommen werden.

Wie bereits eingangs erläutert, ist ein derartiges Verfahren unter dem Begriff "Port-Knocking" (Englisch: to knock = anklopfen) bekannt. Die vorgenannten Schritte können beispielsweise über einen so genannten Knock-Daemon, also ein Programm, welches Port-Knocking ermöglicht, durchgeführt werden. Der Knock-Daemon wird durch das Bearbeitungs-Computersystem über eintreffende Datenpakete an seiner Netzwerk-Schnittstelle informiert, überprüft die an das Bearbeitungs-Computersystem gesendete Daten-Sequenz und veranlasst gegebenenfalls (z. B. durch Starten eines Skriptes/Programmes) ein gesteuertes Übertragen des Authentifizierungs-Paketes vom Vermittlungs-Computersystem an das Bearbeitungs-Computersystem, wenn die gesendete Daten-Sequenz mit der vordefinierten Sequenz übereinstimmt. Der oben beschriebene Ablauf ermöglicht somit - aktiviert durch das Bearbeitungs-Computersystem, welches einen entsprechenden Dienst auf dem Vermittlungs-Computersystem über Netzwerk anspricht - das Übertragen/Kopieren des Authentifizierungs-Paketes vom Vermittlungs-Computersystem auf das Bearbeitungs-Computersystem, ohne dass das Bearbeitungs-Computersystem hierfür einen offenen Netzwerk-Port mit einem ansprechbaren Programm vorhalten muss.

Alternativ oder ergänzend zum oben erläuterten Port-Knocking ist auch denkbar, dass das Bearbeitungs-Computersystem von sich aus in regelmäßigen Abständen beim Vermittlungs-Computersystem anfragt (so genanntes Polling), ob ein oder mehrere auszutauschende Authentifizierungs-Pakete vorliegen. Ist dies der Fall, kann eine entsprechende Übertragung der Authentifizierungs-Pakete vom Vermittlungs-Computersystem an das Bearbeitungs-Computersystem initiiert werden, wie oben erläutert. Es ist auch denkbar, dass das Bearbeitungs-Computersystem ein Polling durchführt, wenn z. B. eine bestimmte Zeitspanne überschritten wird, in der kein Port-Knocking seitens des Vermittlungs-Computersystems oder des externen Computersystems durchgeführt worden ist. Probleme beim Port-Knocking können so erkannt werden und die Funktionalität der Computernetz-Infrastruktur bleibt erhalten.

Alternativ zu den genannten Lösungen (Port-Knocking, Polling) wäre auch denkbar, ein spezielles Verbindungsnetz zwischen dem Vermittlungs-Computersystem und dem Bearbeitungs-Computersystem vorzusehen, wobei das Bearbeitungs-Computersystem zumindest einen Netzwerk-Port zur Ansprechbarkeit über dieses spezielle Verbindungsnetz geöffnet hat. Über das Verbindungsnetz könnte dann das Authentifizierungs-Paket vom Vermittlungs-Computersystem an das Bearbeitungs-Computersystem übertragen werden. Dabei kann vorteilhaft ein anderes Protokoll verwendet werden als für eine Verbindung zwischen dem externen Computersystem und dem Vermittlungs-Computersystem vorgesehen ist. Ein solcher Protokollwechsel erhöht ebenfalls die Sicherheit gegen Manipulationen von außerhalb des Netzwerks.

Vorteilhaft werden Daten-Pakete zwischen dem externen Computersystem und der Computernetz-Infrastruktur über einen Paket-Filter geleitet, wobei der Paket-Filter zum externen Computersystem hin zumindest einen Netzwerk-Port für einen Zugriff durch das externe Computersystem offen hält und wobei der Paket-Filter zur Computernetz-Infrastruktur hin vorbestimmte Netzwerk-Ports geschlossen hält, so dass zumindest ein Zugriff von einem Bearbeitungs-Computersystem innerhalb der Computernetz-Infrastruktur auf das externe Computersystem verhindert wird.

Der Paket-Filter hat den Vorteil, dass die Computernetz-Infrastruktur nach außen hin abgesichert bleibt, so dass keine initialen Anfragen für einen Verbindungsaufbau, Informationen, und so weiter von einem internen Computersystem (zum Beispiel nach einem internen Angriff) nach außen geschickt werden können, weil der Packet-Filter die Daten nicht weiterleiten würde. Entsprechende Pakete werden somit aus Richtung der Computernetz-Infrastruktur im Paket-Filter verworfen. Andererseits ist es möglich, Authentifizierungs-Pakete externer Computersysteme über den Paket-Filter in die Computernetz-Infrastruktur hinein zu transportieren und auf dem Vermittlungs-Computersystem abzulegen. Ein derartiger Paket-Filter ist also ein Schutz/eine Blockade nach außen.

Vorteilhaft werden Daten-Pakete zwischen dem Vermittlungs-Computersystem und dem Bearbeitungs-Computersystem innerhalb der Computernetz-Infrastruktur über einen (weiteren) Paket-Filter geleitet, wobei dieser Paket-Filter in der Kommunikationsrichtung vom Vermittlungs-Computersystem hin zum Bearbeitungs-Computersystem nur Daten-Pakete weiterleitet, welche die IP-Adresse des Vermittlungs-Computersystems enthalten und einer bereits hergestellten Verbindung zwischen dem Vermittlungs-Computersystem und dem Bearbeitungs-Computersystem zugeordnet werden können.

Diese Filterung lässt vorteilhaft nur Daten-Pakete einer Verbindung mit Status "Established" oder "Related" von der exakten IP-Adresse des Vermittlungs-Computersystems zu. Ein Versuch eines Verbindungsaufbaus (z. B. via Senden von so genannten SYN-Paketen) oder auch ein Senden von Port-Knocking-Paketen initial vom Vermittlungs-Computersystem aus wird durch diesen Paket-Filter geblockt.

Die Filterung verhindert eine Fälschung einer IP-Adresse (so genanntes IP-Spoofing) eines vermeintlich vertraulichen (externen oder internen) Computersystems von dem (nach Angriff manipulierten) Vermittlungs-Computersystem aus. Damit wird der Aufbau einer manipulierten Verbindung unterbunden, die einen Port-Filter oder eine Port-Sperre am Bearbeitungs-Computersystem umgehen könnte und so manipulierten Zugriff an selektiv geöffneten Netzwerk-Ports des Bearbeitungs-Computersystems erhalten würde. Ein derartiger Paket-Filter ist hier also ein Schutz beziehungsweise eine Blockade gegen interne Manipulationen. Wenn das Vermittlungs-Computersystem von einem Angreifer manipuliert wird, verhindern diese Maßnahmen ein Ausweiten des Angriffs auf das interne Bearbeitungs-Computersystem innerhalb der Computernetz-Infrastruktur über eine manipulierte "vertrauliche" IP-Adresse, die nicht der exakten IP-Adresse des Vermittlungs-Computersystems entspricht.

Selbst wenn ein Angreifer im Vermittlungs-Computersystem dessen exakte IP-Adresse für einen weitergehenden Angriff verwenden möchte, so bleiben initiale Verbindungsversuche zum Bearbeitungs-Computersystem erfolglos, weil der Paket-Filter lediglich Rückantworten innerhalb von Verbindungen zulässt, die vom Bearbeitungs-Computersystem aus aufgebaut worden sind. Auf diese Weise erschweren die Maßnahmen einen Zugriff auf unter Umständen vertrauliche Daten innerhalb des Bearbeitungs-Computersystems aufgrund eines Angriffs vom Vermittlungs-Computersystem aus.

In der Kommunikationsrichtung vom Bearbeitungs-Computersystem hin zum Vermittlungs-Computersystem kann durch den erläuterten Paket-Filter ein erlaubter Datenaustausch auf vorbestimmte Netzwerk-Ports des Vermittlungs-Computersystems für ausgewählte Dienste (z. B. scp oder alternativ andere gewählte Protokolle) freigeschaltet sein.

In einer vorteilhaften Ausgestaltung des vorliegenden Verfahrens umfasst das Übertragen des Authentifizierungs-Paketes vom externen Computersystem an das Vermittlungs-Computersystem folgende Teilschritte:
- Aufbauen einer Verbindung vom externen Computersystem zu einem Vermittlungs-Load Balancer, der einer Mehrzahl von Vermittlungs-Computersystemen vorgeschaltet ist,
- Auswahl des Vermittlungs-Computersystems aus der Mehrzahl von Vermittlungs-Computersystemen durch den Vermittlungs-Load Balancer, und
- Weiterleiten des Authentifizierungs-Paketes vom externen Computersystem über den Vermittlungs-Load Balancer an das ausgewählte Vermittlungs-Computersystem.

Ein derartiger Vermittlungs-Load Balancer findet vorteilhaft in einer Konstellation Anwendung, bei der innerhalb der Computernetz-Infrastruktur eine Mehrzahl von Vermittlungs-Computersystemen eingerichtet ist zur Vermittlung einer Vielzahl von Anfragen durch eine Vielzahl von externen Computersystemen zum Freischalten gemäß der erläuterten Art und Weise. Insbesondere im Falle eines großen Lastvolumens kann somit die Netzwerklast durch den Vermittlungs-Load Balancer auf unterschiedliche Vermittlungs-Computersysteme aufgeteilt werden, so dass eine gute Performance der Computernetz-Infrastruktur erhalten bleibt. Die einzelnen Vermittlungs-Computersysteme arbeiten jeweils nach dem oben erläuterten Verfahren.

Insbesondere leitet der Vermittlungs-Load Balancer Daten-Pakete (z.B. generell jegliche IP-Pakete), die von externen Computersystemen geschickt werden, auf ein zuvor vom Vermittlungs-Load Balancer ausgewähltes, spezifisches Vermittlungs-Computersystem weiter. Das jeweils ausgewählte Vermittlungs-Computersystem nimmt insbesondere ein über den Vermittlungs-Load Balancer weitergeleitetes Authentifizierungs-Paket eines externen Computersystems entgegen.

Zur Auswahl eines aus der Mehrzahl der Vermittlungs-Computersysteme kann sich der Vermittlungs-Load Balancer eines beliebigen Algorithmus bedienen. Ein derartiger Algorithmus kann in einem einfachen Fall eine Unterscheidung nach der sichtbaren IP-Adresse, die dem externen Computersystem zuordenbar ist, vornehmen. Wie oben bereits erläutert, kann diese IP-Adresse z.B. diejenige eines NAT-Routers sein, von dem der Vermittlungs-Load Balancer das Authentifizierungs-Paket unmittelbar erhalten hat. Beispielsweise kann der Algorithmus ein so genanntes "Source Hashing Scheduling" umfassen. Dabei werden Netzwerkverbindungen zu den nachgelagerten Vermittlungs-Computersystemen aus einer Look-up Tabelle in Abhängigkeit von (öffentlichen) Quell-IP-Adressen zugeteilt, welche anfragenden externen Computersystemen zuordenbar sind.

Nach Auswahl eines spezifischen Vermittlungs-Computersystems und Weiterleiten des Authentifizierung-Paketes an dieses Vermittlungs-Computersystem durch den Vermittlungs-Load Balancer führt das Vermittlungs-Computersystem anschließend eine verfahrensgemäß erläuterte Verarbeitung bzw. Weiterleitung des Authentifizierungs-Paketes an ein entsprechendes Bearbeitungs-Computersystem durch. Unter Umständen erfolgt im Vermittlungs-Computersystem wiederum eine Auswahl eines aus einer Mehrzahl von Bearbeitungs-Computersystemen.

Nach einer erfolgreichen Authentifizierung eines externen Computersystems vermittels des Authentifizierungs-Paketes erfolgt ein Aufbauen einer Verbindung zum selektiv freigeschalteten Netzwerk-Port des (ausgewählten) Bearbeitungs-Computersystems durch das externe Computersystem (wie oben erläutert). Dies kann in einer denkbaren Konstellation über den Vermittlungs-Load Balancer geschehen, welcher dann die Verbindung vom externen Computersystem an das Bearbeitungs-Computersystem weiterleitet. In diesem Fall erfolgt vorteilhaft sowohl eine Auswahl eines spezifischen Vermittlungs-Computersystems durch den Vermittlungs-Load Balancer als auch gegebenenfalls eine Auswahl eines spezifischen Bearbeitungs-Computersystems durch das entsprechende Vermittlungs-Computersystem anhand desselben Algorithmus. Somit wird sichergestellt, dass eine Verbindunganfrage eines freigeschalteten externen Computersystems vom Vermittlungs-Load Balancer an das richtige Bearbeitungs-Computersystem weitergeleitet wird, welches seinerseits vom entsprechenden Vermittlungs-Computersystem bestimmungsgemäß das Authentifizierungs-Paket erhalten hat.

Der Vermittlungs-Load Balancer kann in einer denkbaren Konstellation gemeinsam mit einem oder mehreren der oben erläuterten Paket-Filter in einem logisch ansprechbaren System zusammengefasst sein. Zum Beispiel kann ein Server eingerichtet sein, der sowohl die Funktion des Vermittlungs-Load Balancers als auch die Funktion eines entsprechenden Paket-Filters bereitstellt.

In einer alternativen oder ergänzenden Ausgestaltung des vorliegenden Verfahrens arbeitet das Bearbeitungs-Computersystem als Bearbeitungs-Load Balancer, der einer Mehrzahl von Backend-Bearbeitungs-Computersystemen vorgeschaltet ist und folgende Maßnahmen durchführt:
- Auswahl eines Backend-Bearbeitungs-Computersystems aus der Mehrzahl der Backend-Bearbeitungs-Computersysteme, und
- Weiterleiten einer durch das externe Computersystem zum selektiv freigeschalteten Netzwerk-Port des Bearbeitungs-Load Balancers aufgebauten Verbindung an das ausgewählte Backend-Bearbeitungs-Computersystem.

In dieser Konstellation erfolgt ein Load Balancing auf der Ebene der Bearbeitungs-Computersysteme, wobei das verfahrensgemäße Bearbeitungs-Computersystem als Bearbeitungs-Load Balancer arbeitet und mehrere weitere Bearbeitungs-Computersysteme als Backend-Bearbeitungs-Computersysteme dem Bearbeitungs-Load Balancer nachgeschaltet sind zur weiteren Verarbeitung einer Anfrage und gegebenenfalls Freischaltung eines externen Computersystems. Eine Auswahl eines spezifischen Backend-Bearbeitungs-Computersystems erfolgt durch den Bearbeitungs-Load Balancer vorteilhaft anhand eines vorbestimmten Algorithmus. Hier ist, ähnlich zu einem oben erläuterten Vermittlungs-Load Balancer, ein "Source Hashing Scheduling" denkbar. Alternativ können auch andere Load Balancing Algorithmen Anwendung finden.

Gemäß dieser Ausgestaltung des Verfahrens wird ein automatisiertes Übertragen eines Authentifizierungs-Paketes von einem Vermittlungs-Computersystem an den Bearbeitungs-Load Balancer durchgeführt. Wie weiter oben allgemein für ein Bearbeitungs-Computersystem erläutert, hält hier der Bearbeitungs-Load Balancer zumindest vorübergehend vorbestimmte Netzwerk-Ports geschlossen, so dass ein Zugriff auf den Bearbeitungs-Load Balancer über Netzwerk vermittels dieser Netzwerk-Ports verhindert wird. Allerdings kann der Bearbeitungs-Load Balancer auf das Vermittlungs-Computersystem zugreifen, um das Authentifizierungs-Paket vom Vermittlungs-Computersystem abzuholen. Nach einer erfolgreichen Authentifizierung des externen Computersystems vermittels des Authentifizierungs-Paketes erfolgt ein Freischalten zumindest eines selektiven Netzwerk-Ports im Bearbeitungs-Load Balancer für eine Kommunikation mit dem externen Computersystem. Anschließend kann das externe Computersystem eine Verbindung zum selektiv freigeschalteten Netzwerk-Port des Bearbeitungs-Load Balancers aufbauen, sodass eine weitere verfahrensgemäße Kommunikation durchführbar ist.

Der Bearbeitungs-Load Balancer leitet die durch das externe Computersystem aufgebaute Verbindung an ein Backend-Bearbeitungs-Computersystem weiter, welches zuvor vom Bearbeitungs-Load Balancer ausgewählt wurde. Anschließend kann dann beispielsweise durch das externe Computersystem auf eine Anwendung zugegriffen werden, die durch das Backend-Bearbeitungs-Computersystem bereitgestellt wird.

In einem weiteren Aspekt wird die obige Aufgabe durch ein verteiltes Rechnernetz nach Anspruch 11 gelöst. Das verteilte Rechnernetz weist eine Computernetz-Infrastruktur auf, welche zumindest ein Vermittlungs-Computersystem und ein Bearbeitungs-Computersystem umfasst. Ferner ist zumindest ein externes Computersystem im verteilten Rechnernetz eingerichtet, welches sich außerhalb der Computernetz-Infrastruktur befindet.

Das externe Computersystem ist eingerichtet, ein Authentifizierungs-Paket an das Vermittlungs-Computersystem zu übertragen zur Authentifizierung für eine Kommunikation mit dem Bearbeitungs-Computersystem. Das Vermittlungs-Computersystem ist eingerichtet, das Authentifizierungs-Paket automatisiert an das Bearbeitungs-Computersystem zu übertragen.

Das Bearbeitungs-Computersystem weist eine Zugriffssteuereinheit auf, die eingerichtet ist, zumindest vorübergehend vorbestimmte Netzwerk-Ports geschlossen zu halten, so dass ein Zugriff auf das Bearbeitungs-Computersystem über ein Netzwerk vermittels dieser Netzwerk-Ports verhindert ist, jedoch ein Zugriff des Bearbeitungs-Computersystems auf das Vermittlungs-Computersystem erlaubt ist, um das Authentifizierungs-Paket vom Vermittlungs-Computersystem abzuholen.

Ferner ist die Zugriffssteuereinheit des Bearbeitungs-Computersystems eingerichtet, nach einer erfolgreichen Authentifizierung des externen Computersystems am Bearbeitungs-Computersystem oder an einem dem Bearbeitungs-Computersystem nachgeschalteten Backend-Bearbeitungs-Computersystem zumindest einen selektiven Netzwerk-Port für eine Kommunikation mit dem externen Computersystem freizuschalten.

Vorteilhaft ist ein derartiges verteiltes Rechnernetz eingerichtet, ein Verfahren der hier erläuterten Art durchzuführen.

Auch durch ein verteiltes Rechnernetz dieser Art ergeben sich die im Zusammenhang mit dem oben erläuterten Verfahren genannten Vorteile analog. Sämtliche vorteilhaften Maßnahmen, die im Zusammenhang mit dem obigen Verfahren erläutert wurden, finden in entsprechenden strukturellen Merkmalen des verteilten Rechnernetzes Anwendung und umgekehrt.

In einem weiteren Aspekt wird die obige Aufgabe durch ein Computerprogramm-Produkt nach Anspruch 15 gelöst, welches eingerichtet ist, auf einem oder mehreren Computersystemen ausgeführt zu werden und welches bei Ausführung ein Verfahren der oben erläuterten Art durchführt.

Weitere vorteilhafte Ausführungen sind in den Unteransprüchen sowie in der nachfolgenden Figurenbeschreibung offenbart.

Die Erfindung wird anhand zweier Zeichnungen im Folgenden näher erläutert.

Es zeigen:
- Figur 1: eine schematisierte Darstellung zumindest eines Teils einer Computernetz-Infrastruktur gemäß einer ersten Konfiguration zum Freischalten eines externen Computersystems,
- Figur 2: eine schematisierte Darstellung zumindest eines Teils einer Computernetz-Infrastruktur gemäß einer zweiten Konfiguration zum Freischalten eines externen Computersystems,
- Figur 3: eine schematisierte Darstellung zumindest eines Teils einer Computernetz-Infrastruktur gemäß einer dritten Konfiguration mit Load Balancing zum Freischalten eines externen Computersystems,
- Figur 4: eine schematisierte Darstellung zumindest eines Teils einer Computernetz-Infrastruktur gemäß einer vierten Konfiguration mit Load Balancing zum Freischalten eines externen Computersystems und
- Figur 5: eine schematisierte Darstellung zumindest eines Teils einer Computernetz-Infrastruktur gemäß einer weiteren Konfiguration mit Load Balancing zur generellen Kommunikation mit einem externen Computersystem.

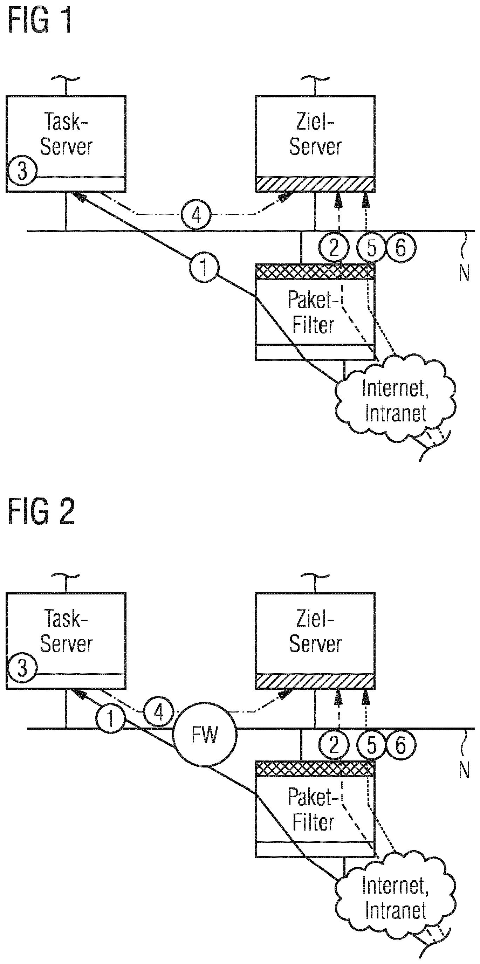

Figur 1 zeigt eine schematisierte Darstellung eines Teils einer Computernetz-Infrastruktur, umfassend ein Vermittlungs-Computersystem, das in Figur 1 als Task-Server deklariert ist, sowie ein Bearbeitungs-Computersystem, das in Figur 1 als Ziel-Server deklariert ist. Der Task-Server und der Ziel-Server können über ein Netzwerk N miteinander kommunizieren sowie Daten austauschen.

Ferner umfasst die Computernetz-Infrastruktur nach Figur 1 einen Paket-Filter, der nach innen zum Task-Server sowie zum Ziel-Server hin über das Netzwerk N angebunden ist und nach außen hin über Internet beziehungsweise über ein weiteres Intranet an die Außenwelt angebunden ist. Letztere Anbindung ist schematisiert in Figur 1 symbolisch als Wolke angedeutet.

Der Task-Server ist in der dargestellten Topologie als so genanntes "offenes" System eingerichtet. Das bedeutet, dass der Task-Server zumindest einen Netzwerk-Port für die in diesem Kontext erläuterten Zwecke geöffnet hat, wobei ein Dienst beziehungsweise eine Applikation auf dem Task-Server läuft, um eine Ansprechbarkeit beziehungsweise einen Verbindungsaufbau über das Netzwerk N zu ermöglichen. Beispielsweise kann eine Netzwerk-Verbindung bei diesem Computersystem über VPN ("Virtual Private Network") oder SSH ("Secure Shell") oder eine Kombination derartiger Sicherheitsmaßnahmen eingeschränkt sein, so dass nur vorbestimmte, verschlüsselte Netzwerk-Verbindungen über das Netzwerk N mit dedizierten Computersystemen erlaubt sind. Der Task-Server dient als Vermittler zur Kommunikation und Weiterleitung von Daten-Paketen an den Ziel-Server innerhalb der Computernetz-Infrastruktur.

Im Unterschied zum Task-Server verhält sich der Ziel-Server generell als speziell abgesichertes System mit geschlossenen Netzwerk-Ports. Dies ist durch eine schraffierte Ein-/Ausgangsebene am Ziel-Server in der Zeichnung schematisiert dargestellt. Das bedeutet, dass an den Netzwerk-Ports des Ziel-Servers initial keine laufenden Programme oder Dienste für eine Ansprechbarkeit beziehungsweise einen Verbindungsaufbau über das Netzwerk N von außen sichtbar bzw. verfügbar sind. Vielmehr ist ein nicht autorisierter Zugriff auf den Ziel-Server über das Netzwerk N aufgrund der jeweils geschlossenen Netzwerk-Ports des Ziel-Servers nicht möglich, weil nicht authentifizierte Verbindungen, z.B. durch geeignete Firewall-Regeln (z.B. iptables) - entweder auf dem Ziel-Server selbst oder auf einem vorgeschalteten System (z.B. einem Router) - unterbunden werden. Es ist jedoch denkbar, dass eine Benutzergruppe lokal auf den Ziel-Server zugreifen kann, um dort lokal vorbestimmte Aktionen durchzuführen.

Der Paket-Filter weist zum Task-Server und zum Ziel-Server hin (d. h. in Richtung des Netzwerkes N hin) Netzwerk-Ports auf, die zu den in diesem Kontext genannten Zwecken geschlossen sind. Dies ist in Figur 1 durch eine kreuzschraffierte Ein-/Ausgangsebene am Paket-Filter in Richtung des Netzwerks N dargestellt. Das bedeutet, dass der Paket-Filter, wie im Zusammenhang mit dem Ziel-Server oben erläutert, keinerlei Daten nach außen weiterleitet und daher keinerlei Verbindungsaufbau vom Task-Server oder vom Ziel-Server über das Netzwerk N aus nach außen zulässt.

Umgekehrt umfasst der Paket-Filter in der Kommunikationsrichtung von außerhalb der Computernetz-Infrastruktur, das heißt, über das symbolisch dargestellte Internet oder ein weiteres Intranet zumindest einen geöffneten Netzwerk-Port (so genannter "Listening" Port) auf, so dass ein Verbindungsaufbau von außerhalb (Internet, Intranet) vermittels des Paket-Filters über das Netzwerk N auf den Task-Server der Computernetz-Infrastruktur möglich ist. Der Paket-Filter gemäß Figur 1 stellt somit einen Schutz der Computernetz-Infrastruktur nach außen dar. Weiterhin verhindert er nicht-gewollten Traffic von innen nach außen.

Zur Kommunikation innerhalb der Computernetz-Infrastruktur zwischen dem Task-Server und dem Ziel-Server ist ein vorbestimmter Prozess eingerichtet. Anweisungen können vom Ziel-Server unmittelbar über eine aufgebaute Verbindung ("Established") an den Task-Server übertragen werden, weil der Task-Server, wie oben erläutert, über das Netzwerk N direkt vom Ziel-Server ansprechbar ist.

In Richtung zum Ziel-Server hin muss, ausgehend vom Task-Server oder von einem externen Computersystem (nicht dargestellt) außerhalb der Computernetz-Infrastruktur, zunächst ein Port-Knocking-Prozess durchgeführt werden. Hierzu wird eine vorbestimmte Sequenz an Paket-Daten entweder vom Task-Server oder vom externen Computersystem an den Ziel-Server gesendet, wobei die Netzwerk-Ports des Ziel-Servers geschlossen sind und wobei die Sequenz in einer vorbestimmten Reihenfolge einen oder mehrere Netzwerk-Ports des entsprechenden Bearbeitungs-Computersystems anspricht. Anschließend erfolgt eine Überprüfung der gesendeten Sequenz im Ziel-Server auf Übereinstimmung mit einer vordefinierten Sequenz. Im Erfolgsfall erfolgt für eine Kommunikation zwischen dem Ziel-Server und dem Task-Server ein Verbindungsaufbau ausgehend vom Ziel-Server hin zum Task-Server sowie ein Veranlassen eines Übertragens eines entsprechenden Daten-Paketes und/oder einer Anweisung über die aufgebaute Verbindung ("Established").

Insbesondere startet der Ziel-Server einen Prozess, der ein zu übertragendes Daten-Paket vom Task-Server abholt. Ein derartiger Prozess kann beispielsweise über den Unix-basierten Befehl "Secure Copy" (scp) erfolgen. Auf diese Weise können die beteiligten Computersysteme trotz geschlossener Netzwerk-Ports des Ziel-Servers innerhalb der Computernetz-Infrastruktur miteinander kommunizieren, Daten-Pakete weiterleiten und/oder Anweisungen erteilen.

Nachfolgend soll anhand mehrerer Verfahrensschritte, welche in der Zeichnung als Nummerierungen 1 bis 6 aufgeführt sind, ein Verfahren zum Freischalten einer Kommunikation zwischen dem abgesicherten Ziel-Server innerhalb der Computernetz-Infrastruktur und einem externen Computersystem außerhalb der Computernetz-Infrastruktur, welches in Figur 1 nicht dargestellt ist, erläutert werden.

In einem Schritt 1 verlangt ein externes Computersystem über das Internet und/oder ein von der Computernetz-Infrastruktur (Netzwerk N) getrenntes Intranet eine Freischaltung einer Kommunikation mit dem Ziel-Server. Das externe Computersystem kann beispielsweise ein Client sein, der eine Applikation auf dem Ziel-Server innerhalb der Computernetz-Infrastruktur freischalten will. Der Ziel-Server hat jedoch zu diesem Zeitpunkt für das externe Computersystem keine offenen Netzwerk-Ports und gestattet keinen Verbindungsaufbau von extern.

Das externe Computersystem kann beispielsweise hinter einem NAT-/PAT-Router sitzen, der eine lokale private IP-Adresse des externen Computersystems mit einer (eindeutigen) öffentlichen IP-Adresse des Routers maskiert. Auf diese Weise ist jedoch das externe Computersystem durch den Ziel-Server nicht direkt ansprechbar, weil der Ziel-Server die genaue (private) IP-Adresse des externen Computersystems nicht kennt. Ferner kann gemäß der Konfiguration aus Figur 1 der Ziel-Server über den Paket-Filter gar keine Verbindung nach außerhalb der Computernetz-Infrastruktur initiieren, weil der Paket-Filter in Richtung des Netzwerks N, wie oben erläutert, keine Daten weiterleitet und keinen Verbindungsaufbau nach außen zulässt.

Für eine Authentifizierung des externen Computersystems zum Freischalten einer Kommunikation mit dem Ziel-Server, der initial ebenfalls geschlossene Netzwerk-Ports aufweist und keinen unmittelbaren Verbindungsaufbau vom externen Computersystem aus zulässt, muss somit ein spezielles Authentifizierungs-Verfahren durchgeführt werden.

Hierzu schickt das externe Computersystem im Schritt 1 über das Internet/Intranet (vgl. das Wolkensymbol in Figur 1) und via dem Paket-Filter ein Authentifizierungs-Paket über das Netzwerk N an den von außen ansprechbaren Task-Server innerhalb der Computernetz-Infrastruktur. Zur Übertragung dieses Paketes kann eine Authentifizierung des externen Computersystems am Task-Server (z. B. über ein VPN und/oder ähnliches) notwendig sein.

Das Authentifizierungs-Paket enthält signierte Informationen zur Authentifizierung des externen Computersystems am Ziel-Server. Diese signierten Informationen können beispielsweise Signaturen des externen Computersystems und/oder eines separaten Key-Computersystems (nicht dargestellt) enthalten, wobei das Key-Computersystem eine Sicherheits-Instanz zum Festlegen und Signieren des externen Computersystems als erlaubtes Computersystem für einen Zugriff auf den Ziel-Server darstellt. Ein separates Key-Computersystem als getrennte Sicherheits-Instanz hat den Vorteil, dass eine Authentifizierung allein im externen Computersystem nicht oder nur erschwert gefälscht werden kann. Auf diese Weise wird sichergestellt, dass ein externes Computersystem, welches den Ziel-Server für eine Kommunikation zumindest partiell freischalten will, tatsächlich autorisiert ist.

Ferner können die signierten Informationen im Authentifizierungs-Paket auch Informationen über das externe Computersystem (z. B. welchen Dienst das externe Computersystem ansprechen will) und/oder gegebenenfalls Durchführungsparameter zur vorbestimmten Durchführung eines Freischaltens beziehungsweise eines nach dem Freischalten durchzuführenden Prozesses im Ziel-Server enthalten. Das Authentifizierungs-Paket kann auch aus Passwörtern (von Benutzern) generierte Daten, wie z.B. Hashes oder Signaturen, enthalten. Eine weitere oder endgültige Authentifizierung ist optional am Ziel-Server möglich.

In einem Schritt 2 schickt das externe Computersystem über das Internet/Intranet und den Paket-Filter der Computernetz-Infrastruktur vermittels des Netzwerks N unmittelbar an den Ziel-Server ein Anklopfsignal im Sinne eines Port-Knockings (wie oben mehrfach erläutert). Eine vorbestimmte Daten-Sequenz des Anklopfsignals wird an den zunächst geschlossenen Netzwerk-Ports des Ziel-Servers über einen Dienst (z. B. einen Knock-Daemon) ausgewertet und mit einer vordefinierten Daten-Sequenz verglichen. Bei Übereinstimmung wird beispielsweise ein Skript oder Programm im Ziel-Server gestartet zur weiteren Prozessierung des im Task-Server vorliegenden Authentifizierungs-Paketes.

Die Maßnahmen des Schrittes 2 (Anklopfen am Ziel-Server) stellen gewissermaßen eine Initiierung für den Ziel-Server dar, dass im Task-Server ein Daten-Paket für weitergehende Aktionen vorliegt. Ein Port-Knocking am Ziel-Server kann alternativ zum externen Computersystem auch vom Task-Server aus in Richtung Ziel-Server erfolgen.

Das im Task-Server vorliegende Authentifizierungs-Paket wird in einem Schritt 3 zunächst lokal verarbeitet. Diese Verarbeitung kann eine Signaturprüfung und/oder eine Prüfung von weiteren Informationen im Authentifizierungs-Paket, wie z. B. von Durchführungsparametern, umfassen. Weiterhin wird in diesem Schritt das Authentifizierungs-Paket um die sichtbare Quell-IP-Adresse ergänzt, die dem externen anfragenden Computersystem zugeordnet werden kann und beispielsweise die öffentliche IP-Adresse eines NAT-Routers ist, der das Authentifizierungs-Paket an den Task-Server gesendet hat. Auf diese Weise weiß der Ziel-Server im nachfolgenden Verfahren, dass diese ergänzte Quell-IP-Adresse temporär freigeschaltet werden soll.

Ferner erfolgt im Schritt 3 das Verschieben des Authentifizierungs-Paketes in eine Ablage für die Abholung durch den Ziel-Server, falls die Überprüfung des Authentifizierungs-Paketes im Task-Server erfolgreich war. Andernfalls (falls eine Überprüfung nicht erfolgreich war) kann das Authentifizierungs-Paket im Task-Server beispielsweise verworfen werden. Dann erfolgt keine weitergehende Aktion und das Verfahren ist beendet.

Ferner kann bei erfolgreicher Überprüfung und Ablage des Authentifizierungs-Paketes im Task-Server zur Abholung durch den Ziel-Server ein Routing des Authentifizierungs-Paketes zum Ziel-Server ermittelt werden. Dies ist beispielsweise bei einer Computernetz-Infrastruktur mit mehreren Ziel-Servern sinnvoll, so dass sichergestellt werden kann, dass ein Authentifizierungs-Paket an das richtige Ziel-Computersystem innerhalb der Computernetz-Infrastruktur verteilt wird.

Im Schritt 4 veranlasst der Ziel-Server einen Verbindungsaufbau über das Netzwerk N zum Task-Server und startet einen Prozess zum Übertragen des Authentifizierungs-Paketes vom Task-Server an den Ziel-Server über die aufgebaute Verbindung ("Established"). Ein derartiger Prozess kann beispielsweise über den Unix-basierten Befehl scp erfolgen.

Anschließend wird das Authentifizierungs-Paket vom Task-Server an den Ziel-Server über das Netzwerk N der Computernetz-Infrastruktur übertragen.

Vorteilhaft wird das Authentifizierungs-Paket nochmals im Ziel-Server überprüft. Hierzu können Prüfschritte durchgeführt werden, wie sie auch in Schritt 3 im Task-Server durchgeführt worden sind. Zusätzliche Prüfschritte, z. B. ein Überprüfen eines Prozesses im Ziel-Server, der durch das Authentifizierungs-Paket angewiesen werden soll, und so weiter, sind denkbar.

Falls auch hier eine Überprüfung des Authentifizierungs-Paketes erfolgreich ist, erfolgt ein Freischalten der Quell-IP-Adresse, die dem Ziel-Server vermittels des ergänzten Authentifizierungs-Paketes als die externe Quell-IP-Adresse (die dem externen anfragenden Computersystem zugeordnet werden kann) bekannt ist (siehe oben). Das Freischalten kann selektiv an einem oder mehreren einzelnen Ziel-Netzwerk-Ports des Ziel-Servers erfolgen. Somit ist der Ziel-Server für einen Verbindungsaufbau ausgehend von der Quell-IP-Adresse (und nur von dieser) selektiv an einem oder mehreren bestimmten Ziel-Netzwerk-Ports ansprechbar.

In einem folgenden Schritt 5, welcher vorteilhaft in einem fest vorgegebenen (kurzen) Zeitraum nach Freischalten des/der selektiven Ziel-Netzwerk-Ports am Ziel-Server erfolgen soll, baut nun das externe Computersystem, welches aus dem Internet/Intranet via dem Paket-Filter über das Netzwerk N auf die Computernetz-Infrastruktur zugreifen kann, eine erneute Verbindung (neue Session mit der Kombination "externe bekannte Quell-IP-Adresse/ausgewählter Quell-Netzwerk-Port) zu dem/einem geöffneten Ziel-Netzwerk-Port des Ziel-Servers auf. Falls beispielsweise in einem vorbestimmten Zeitraum kein solcher Verbindungsaufbau seitens des externen Computersystems erfolgt, werden alle verfahrensgemäß selektiv geöffneten Ziel-Netzwerk-Ports für die betroffene IP-Adresse am Ziel-Server wieder geschlossen (sofern keine anderen externen Computersysteme im selben Zeitfenster anfragen), so dass der Ziel-Server für sämtliche externen Computersysteme mit derselben Quell-IP-Adresse nicht mehr ansprechbar ist (Initialzustand). Externe Computersysteme mit einer anderen IP-Adresse können hiervon unberührt während des gesamten Verfahrensablaufs keine Verbindung zum Ziel-Server aufbauen.

Anderenfalls - bei rechtzeitigem Verbindungsaufbau einer neuen Session - erfolgt über die somit aufgebaute und bestehenbleibende ("established") Verbindung zwischen dem externen Computersystem (vermittels der bekannten Quell-IP-Adresse) und dem Ziel-Server ein nochmaliges Übertragen eines Verifikations-Paketes unmittelbar an den nunmehr selektiv geöffneten Ziel-Server. Das Verifikations-Paket kann die identischen Informationen des Authentifizierungs-Paketes enthalten, welches zuvor vermittels des Task-Servers auf den Ziel-Server gelangt ist. Alternativ oder ergänzend kann das Verifikationspaket auch weitere Verifikationsmerkmale (z.B. Identitätsmerkmale des externen Computersystems oder dessen Benutzer, biometrische Daten, Passwörter, Passphrasen, Schlüssel, usw.) enthalten.

Im Ziel-Server erfolgt dann eine Überprüfung der Identität des Verifikations-Paketes mit dem zuvor gesendeten Authentifizierungs-Paket bzw. eine Überprüfung und Bestätigung der Informationen des Authentifizierungs-Paketes anhand der weiteren Verifikationsmerkmale, je nachdem, wie das Verifikations-Paket ausgestaltet ist. Diese Überprüfung stellt eine Sicherheitsmaßnahme dar, dass die aufgebaute Verbindung tatsächlich von demjenigen externen Computersystem (und nur von diesem) initiiert worden ist, welches zuvor eine Freischaltung des Ziel-Servers angefragt hat. Insbesondere ist diese Überprüfung eine Sicherheitsmaßnahme gegen Angreifer, die das Authentifizierungs-Paket nicht geschickt haben, jedoch hinter einem NAT-Router mit der im Ziel-Server freigeschalteten Quell-IP-Adresse sitzen und die Freischaltung für einen manipulierten Zugriff auf den Ziel-Server als Angriff ausnutzen wollen. Derartige Angreifer könnten dann entweder kein Verifikations-Paket oder ein falsches Verifikations-Paket vorweisen, so dass der Ziel-Server erkennt, dass eine nicht-autorisierte Verbindung aufgebaut worden ist. Eine derartige Sicherheitsmaßnahme erschwert somit eine Manipulation des Verfahrens durch Angreifer von außen.

Wenn die Übereinstimmung bzw. Bestätigung des Authentifizierungs-Paketes durch das Verifikations-Paket erfolgreich abgeprüft worden ist, erfolgt eine Beschränkung der aufgebauten Verbindung ausschließlich auf die Kombination der freigeschalteten Quell-IP-Adresse in Verbindung mit dem Quell-Netzwerk-Port, von dem aus das Verifikations-Paket zuletzt übertragen worden ist. Auf diese Weise beschränkt der Ziel-Server die aufgebaute Verbindung nicht nur auf die Quell-IP-Adresse, sondern auch auf die tatsächliche Quell-Verbindung via verwendetem Quell-Netzwerk-Port des autorisierten externen Computersystems. Weitere Verbindungen über die gleiche Quell-IP-Adresse, aber über andere Quell-Netzwerk-Ports auf den Ziel-Server werden dadurch unterbunden. Auch auf diese Weise werden mögliche Angriffsszenarien deutlich erschwert beziehungsweise unterbunden. Bei diesen Maßnahmen ist zu berücksichtigen, dass ggf. parallel stattfindende Verbindungsaufbauten mehrerer Computersysteme sich nicht gegenseitig beeinträchtigen.

Nach diesem Procedere steht somit lediglich eine selektiv aufgebaute Verbindung zwischen dem Quell-Netzwerk-Port des externen Computersystems (womöglich via maskiertem Quell-Netzwerk-Port eines NAT-Routers) und einem selektiv freigeschalteten Ziel-Netzwerk-Port am Ziel-Server. In einem weiterführenden Schritt 6 kann dann eine applikationsspezifische weitere Kommunikation vermittels dieser eingeschränkten Verbindung zwischen dem externen Computersystem und dem Ziel-Server innerhalb der Computernetz-Infrastruktur erfolgen.

Auf diese Weise hat das externe Computersystem über eine Authentifizierung eine Freischaltung des Ziel-Servers für eine Kommunikation erwirkt. Dennoch ist das Verfahren im Gegensatz zu herkömmlichen Maßnahmen deutlich sicherer gegen Angriffe von außen.

Figur 2 zeigt die Konfiguration der Computernetz-Infrastruktur gemäß Figur 1, jedoch zusätzlich mit einem weiteren Paket-Filter FW, welcher im Netzwerk N zwischen dem Task-Server und dem Ziel-Server als Sicherheitsmaßnahme gegen Angriffe innerhalb der Computernetz-Infrastruktur eingerichtet ist. Sämtliche weiteren Instanzen, Maßnahmen und Verfahrensschritte sind identisch mit dem Vorgehen gemäß Figur 1 und bedürfen an dieser Stelle keiner weiteren Erläuterung.

Der Paket-Filter FW dient im Wesentlichen der Vereitelung eines Angriffs auf den Ziel-Server ausgehend vom Task-Server. Ein Eindringling, der im Task-Server entsprechende Rechte (z. B. Administrator-Rechte) erlangt hat, hätte die Möglichkeit eines Angriffs mittels IP-Spoofing, um sich beispielsweise als externer Client mit einer autorisierten externen IP-Adresse auszugeben. So könnte ein optionaler Port-Filter auf dem Ziel-Server (der keinen Verbindungsaufbau von anderen Computersystemen zulässt) umgangen werden. Auf diese Weise könnte ausgehend vom Task-Server über eine gefälschte IP-Adresse ein autorisierter Zugang zum Ziel-Server vorgetäuscht werden.

Als Gegenmaßnahme ist der Paket-Filter FW eingerichtet, der in der Kommunikationsrichtung vom Task-Server zum Ziel-Server lediglich Daten-Pakete einer bereits aufgebauten Verbindung ("Established" oder "Related") zulässt, die von der exakten IP-Adresse des Task-Servers ausgehen. Andere Daten-Pakete werden am Paket-Filter FW in dieser Kommunikationsrichtung verworfen beziehungsweise ignoriert und nicht weitergeleitet. Somit gelangen zum Ziel-Server lediglich Daten-Pakete, die verlässlich und vertrauenswürdig vom Task-Server stammen. Eine Fälschung einer IP-Adresse, ausgehend vom Task-Server (IP-Spoofing), wird dadurch extrem erschwert beziehungsweise unterbunden.

In umgekehrter Kommunikationsrichtung vom Ziel-Server hin zum Task-Server kann der Paket-Filter FW vorteilhaft lediglich Daten-Pakete zulassen, die einen speziellen Dienst am Task-Server (z. B. scp oder ssh oder eine Kombination davon, usw.) ansprechen. Auf diese Weise ist der Task-Server in Richtung Ziel-Server gänzlich abgeschnitten, so dass kein Angriff ausgehend vom Task-Server auf den Ziel-Server erfolgreich ist. In umgekehrter Richtung kann der Ziel-Server jedoch wie gemäß Figur 1 erläutert beispielsweise ein Authentifizierungs-Paket über den Dienst scp vom Task-Server abholen.

Der Paket-Filter FW gemäß Figur 2 kann beispielsweise als speziell abgesicherter 1:1 NAT-Router (IP-Adress-Umsetzer) realisiert sein. Es ist auch denkbar, in diesem Router spezielle Überprüfungsmechanismen, auch in Bezug zum Authentifizierungs-Paket, vorzusehen. Bei 1:1 NAT-Routing werden IP-Adressen eingehender Pakete statisch in andere IP-Adressen umgesetzt. Beispielsweise könnte ein eingehendes Paket mit der beispielhaften Adresse 10.10.10.10 in die IP-Adresse 11.11.11.11 umgesetzt werden.

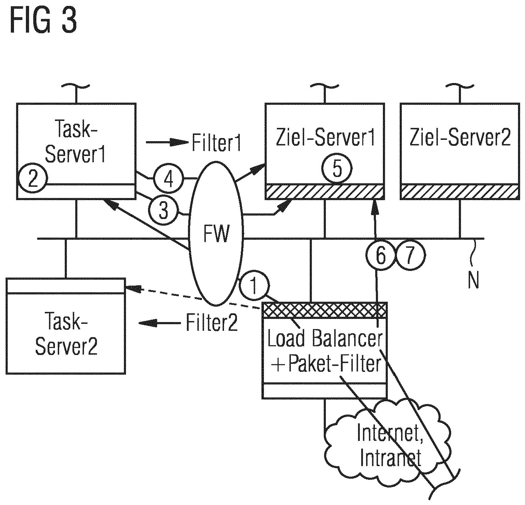

Figur 3 zeigt eine dritte Konfiguration einer Computernetz-Infrastruktur, die grundsätzlich wie die Computernetz-Infrastruktur gemäß Figur 2 eingerichtet ist und entsprechend arbeitet. Allerdings umfasst die Computernetz-Infrastruktur gemäß Figur 3 zwei Vermittlungs-Computersysteme, nämlich Task-Server 1 und Task-Server 2, sowie zwei Bearbeitungs-Computersysteme, nämlich Ziel-Server 1 und Ziel-Server 2. Zusätzlich ist in dem Paket-Filter, vergleiche auch Figur 1, ein Load Balancer integriert, der in der Konstellation gemäß Figur 3 als Vermittlungs-Load Balancer arbeitet. Die Funktionsweise der Computernetz-Infrastruktur gemäß Figur 3 wird nachfolgend erläutert.

In einem Schritt 1 baut ein externes Computersystem, das analog zu den Erläuterungen zu Figuren 1 und 2 als externer Client eingerichtet sein kann, über das Internet und/oder ein von der Computernetz-Infrastruktur (Netzwerk N) getrenntes Intranet eine Verbindung über den Paket-Filter zum Load Balancer auf. Die beiden Bearbeitungs-Computersysteme, Ziel-Server 1 und Ziel-Server 2, haben jedoch zu diesem Zeitpunkt für das externe Computersystem über das Netzwerk N keine offenen Netzwerk-Ports und gestatten keinen Verbindungsaufbau von extern. Gegenüber Task-Server 1 und Task-Server 2 sind Ziel-Server 1 und Ziel-Server 2 im Übrigen über den weiteren Paket-Filter FW abgesichert, wie im Zusammenhang mit Figur 2 erläutert.

Der Load Balancer leitet die Daten-Pakete (generell IP-Pakete) des externen Computersystems mittels eines beliebigen Load-Balancing-Algorithmus an eines der Vermittlungs-Computersysteme, Task-Server 1 oder Task-Server 2, weiter. Zur Auswahl von Task-Server 1 oder Task-Server 2 kann sich der Load Balancer zum Beispiel eines Algorithmus gemäß dem so genannten "Source Hashing Scheduling" bedienen. Dabei wählt der Load Balancer in Abhängigkeit von der öffentlichen IP-Adresse, die dem externen Computersystem zugeordnet werden kann, einen entsprechenden Task-Server aus der Gruppe der Task-Server 1 und Task-Server 2 aus, hier beispielhaft Task-Server 1.

Auf diese Weise wird verfahrensgemäß das bereits erläuterte Authentifizierungs-Paket vom externen Computersystem vermittels des Load Balancers in Schritt 1 an Task-Server 1 übertragen und dort, wie oben im Zusammenhang mit Figur 1 erläutert, in einem Schritt 2 weiterverarbeitet. Dies umfasst zum Beispiel eine Überprüfung auf Gültigkeit und ein Ergänzen um die IP-Adresse, die dem externen Computersystem zugeordnet werden kann.

Generell können in dieser Konfiguration auch Task-Server 1 und Task-Server 2 zwischen Ziel-Server 1 und Ziel-Server 2 anhand eines vorbestimmten Algorithmus auswählen. Vorteilhaft ist hierbei der Algorithmus zur Auswahl eines der Ziel-Server 1 und Ziel-Server 2 derselbe wie der Algorithmus im Load Balancer zur Auswahl eines der Task-Server 1 und Task-Server 2 in Abhängigkeit von der IP-Adresse, die dem externen Computersystem zugeordnet werden kann. Somit ist sichergestellt, dass eine Zuordnung eines externen Computersystems zur Freischaltung für einen Verbindungsaufbau auf einen entsprechenden Ziel-Server sowohl im Load Balancer als auch in Task-Server 1 und Task-Server 2 identisch erfolgt. Dies hat den Effekt, dass ein Verbindungsaufbau von einem freigeschalteten externen Computersystem vermittels des Load Balancers auch auf denjenigen Ziel-Server aus Ziel-Server 1 oder Ziel-Server 2 erfolgt, an den das entsprechende Authentifizierungs-Paket des externen Computersystems zu dessen Freischaltung übermittelt worden ist.

Beispielhaft führt Task-Server 1 in einem Schritt 3 ein Port-Knocking am zuvor von ihm ausgewählten Ziel-Server 1 durch, um dem Ziel-Server 1 zu signalisieren, dass ein Authentifizierungs-Paket in Task-Server 1 abholbereit ist. Anschließend kann Ziel-Server 1 in Schritt 4 eine Verbindung zum Task-Server 1 aufbauen und das Authentifizierung-Paket zu sich abholen, wie verfahrensgemäß im Zusammenhang mit Figur 1 und 2 erläutert.

In einem Schritt 5 überprüft Ziel-Server 1 analog zum oben erläuterten Verfahren die Berechtigung des externen Computersystems anhand des Authentifizierungs-Paketes für den weiteren Verbindungsaufbau. Im Erfolgsfall wird entsprechend ein Netzwerk-Port im Ziel-Server 1 für die IP-Adresse, die dem externen Computersystem zugeordnet werden kann, für einen Zugriff durch das externe Computersystem freigeschaltet.

In einem weiteren Schritt 6 erfolgt schließlich, gegebenenfalls nach einer gesteuerten (kurzen) Wartezeit, ein Verbindungsaufbau einer neuen Session vom externen Computersystem an den Load Balancer, der ihn (mit demselben Algorithmus wie dem von Task-Server 1 verwendeten) an Ziel-Server 1 weiterleitet. Dieser Verbindungsversuch wird eventuell mehrmals wiederholt, falls dieser nicht direkt erfolgreich ist. Diese neue Session kann zum Beispiel direkt die gewünschte Verbindung zu einer Anwendung im Ziel-Server 1 sein, beispielsweise eine VPN-Verbindung, in der die weitere Kommunikation gemäß einem Schritt 7 abgesichert erfolgt.

Im Übrigen sei für die weitere Funktionalität der Computernetz-Infrastruktur gemäß Figur 3 auf die Erläuterungen zu Figur 1 und Figur 2 verwiesen.

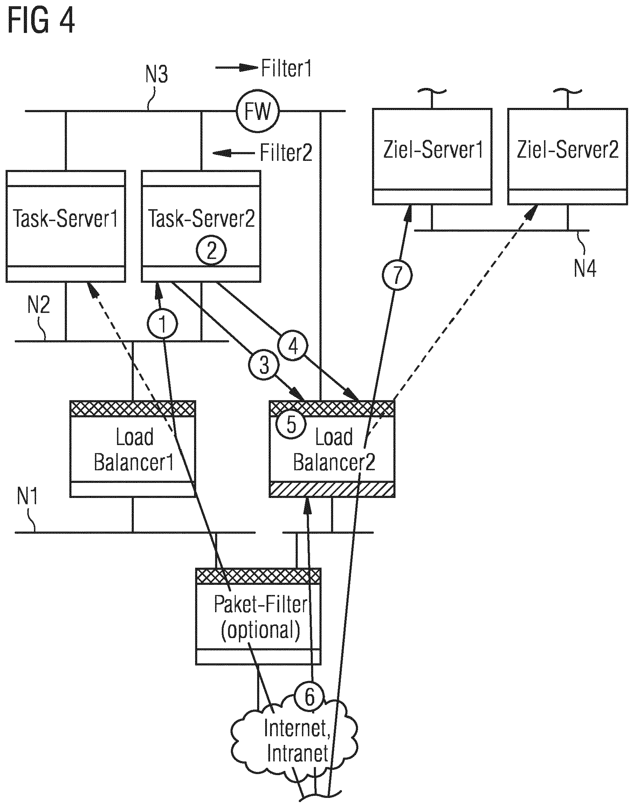

Figur 4 zeigt eine weitere Konfiguration einer Computernetz-Infrastruktur, die die Struktur aus Figur 3 weiterbildet. Auch in der Computernetz-Infrastruktur gemäß Figur 4 sind mehrere Vermittlungs-Computersysteme, Task-Server 1 und Task-Server 2, eingerichtet, denen ein Load Balancer 1 vorgeschaltet ist. Load Balancer 1 arbeitet analog zum Load Balancer gemäß Figur 3 als so genannter Vermittlungs-Load Balancer zur Auswahl eines aus Task-Server 1 und Task-Server 2 zur Entgegennahme von Daten-Paketen eines externen Computersystems.

Die Gruppe der Bearbeitungs-Computersysteme umfasst gemäß Figur 4 einen Load Balancer 2, der als so genannter Bearbeitungs-Load Balancer arbeitet, sowie analog zu Figur 3 einen Ziel-Server 1 sowie einen Ziel-Server 2, die beide als so genannte Backend-Bearbeitungs-Computersysteme dem Load Balancer 2 in der Kommunikation nachgeschaltet sind. Die Funktionsweise der Computernetz-Infrastruktur gemäß Figur 4 wird nachfolgend erläutert.

In einem Schritt 1 baut ein externes Computersystem über das Internet und/oder ein von der Computernetz-Infrastruktur getrenntes Intranet eine Verbindung über den optionalen Paket-Filter vermittels Netzwerk N1 zum Load Balancer 1 auf. Load Balancer 2 hat jedoch zu diesem Zeitpunkt für das externe Computersystem keine offenen Netzwerk-Ports und gestattet keinen Verbindungsaufbau von extern.

Analog zu der bereits erläuterten Vorgehensweise wählt Load Balancer 1 in diesem Beispiel Task-Server 2 aus und übergibt diesem vermittels Netzwerk N2 das Authentifizierungs-Paket des externen Computersystems. In einem Schritt 2 wird das Authentifizierung-Paket im Task-Server 2 weiterverarbeitet, zum Beispiel auf seine Gültigkeit hin überprüft und um die IP-Adresse, die dem externen Computersystem zugeordnet werden kann, ergänzt.

Beispielhaft führt Task-Server 2 in einem Schritt 3 vermittels Netzwerk N3 ein Port-Knocking am Load Balancer 2 durch, um dem Load Balancer 2 zu signalisieren, dass ein Authentifizierungs-Paket in Task-Server 2 abholbereit ist. Anschließend kann Load Balancer 2 in Schritt 4 über das Netzwerk N3 eine Verbindung zum Task-Server 2 aufbauen und das Authentifizierung-Paket zu sich abholen, wie verfahrensgemäß im Zusammenhang mit Figur 1 und 2 erläutert.

In einem Schritt 5 überprüft Load Balancer 2 analog zum oben erläuterten Verfahren die Berechtigung des externen Computersystems anhand des Authentifizierungs-Paketes für den weiteren Verbindungsaufbau. Im Erfolgsfall wird entsprechend ein Netzwerk-Port im Load Balancer 2 für die IP-Adresse, die dem externen Computersystem zugeordnet werden kann, für einen Zugriff durch das externe Computersystem freigeschaltet.

In einem weiteren Schritt 6 erfolgt schließlich, gegebenenfalls nach einer gesteuerten (kurzen) Wartezeit, ein Verbindungsaufbau einer neuen Session vom externen Computersystem an den nun für das externe Computersystem freigeschalteten Load Balancer 2. Dieser Verbindungsversuch wird eventuell mehrmals wiederholt, falls dieser nicht direkt erfolgreich ist. Load Balancer 2 kann über einen beliebigen Algorithmus zwischen Ziel-Server 1 und Ziel-Server 2 zur Weiterleitung einer Verbindung vom externen Computersystem auswählen, wobei Ziel-Server 1 und Ziel-Server 2 über geöffnete Netzwerk-Ports am Netzwerk N4 zum Load Balancer 2 hin durch diesen ansprechbar sind. In dem Beispiel gemäß Figur 4 leitet Load Balancer 2 in Schritt 7 die Verbindung des externen Computersystems über das Netzwerk N4 an Ziel-Server 1 weiter. Diese neue Session kann zum Beispiel direkt die gewünschte Verbindung zu einer Anwendung im Ziel-Server 1 sein, beispielsweise eine VPN-Verbindung, in der die weitere Kommunikation gemäß einem Schritt 7 abgesichert erfolgt.

Es sei angemerkt, dass Load Balancer 1 und Load Balancer 2 gegebenenfalls in einem physischen Gerät integriert sein können. Zudem können einer oder beide Load Balancer 1 und/oder 2 gegebenenfalls redundant ausgelegt sein. Dabei sollte die aktuelle Konfiguration entsprechend auf den redundanten Load Balancer gespiegelt werden, zum Beispiel über ein Storage Area Network.

Im Übrigen sei für die weitere Funktionalität der Computernetz-Infrastruktur gemäß Figur 4 auf die Erläuterungen zu Figur 1 bis 3 verwiesen.

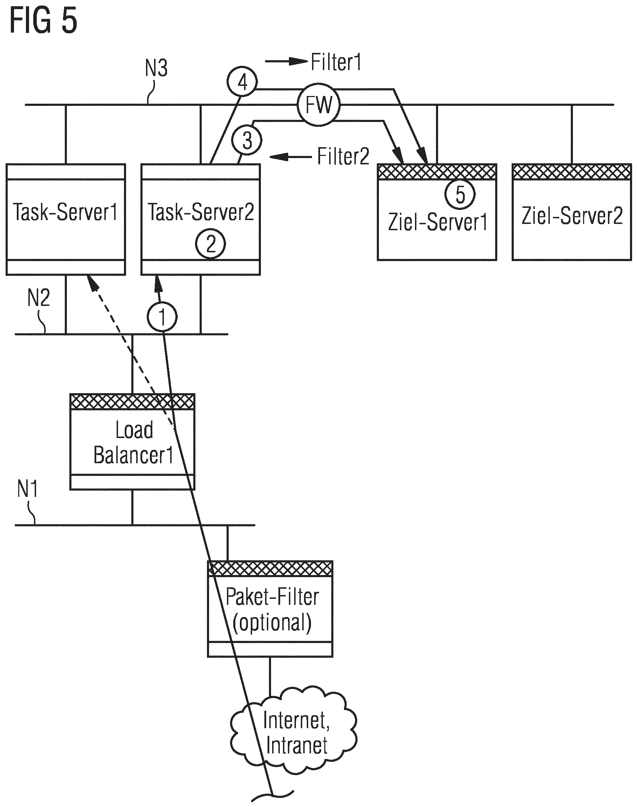

Figur 5 zeigt eine Konfiguration einer Computernetz-Infrastruktur mit einer Funktionalität ähnlich den Erläuterungen zu den Figuren 3 und 4. Im Unterschied zur Konstellationen in Figur 4 weist die Computernetz-Infrastruktur gemäß Figur 5 lediglich einen Load Balancer 1 sowie einen optionalen Paket-Filter auf. Im Übrigen sind in der Computernetz-Infrastruktur gemäß Figur 5 wiederum zwei Task-Server 1 und 2 sowie zwei Ziel-Server 1 und 2 eingerichtet. Im Wesentlichen dient die Konstellation gemäß Figur 5 einem Zugriff auf einen der Ziel-Server 1 oder 2 vermittels eines Load Balancers durch ein externes Computersystem ohne Aufbau einer permanenten Session. Auf diese Weise können beispielsweise Daten-Pakete von einem externen Computersystem an einen der Ziel-Server 1 oder 2 zur weiteren Verarbeitung innerhalb der abgesicherten Computernetz-Infrastruktur weitergegeben werden. Vermittels des Load Balancers 1 kann eine hohe Netzwerklast abgewickelt werden, so dass die Performance der Computernetz-Infrastruktur erhalten bleibt.
Gemäß Figur 5 baut ein externes Computersystem über das Internet und/oder ein von der Computernetz-Infrastruktur getrenntes Intranet eine Verbindung über den optionalen Paket-Filter vermittels Netzwerk N1 zum Load Balancer 1 auf.

Analog zu der bereits erläuterten Vorgehensweise wählt Load Balancer 1 in diesem Beispiel Task-Server 2 aus und übergibt diesem vermittels Netzwerk N2 ein oder mehrere Daten-Pakete des externen Computersystems. In einem Schritt 2 werden die Daten-Pakete im Task-Server 2 weiterverarbeitet, zum Beispiel auf ihre Gültigkeit hin überprüft.

Beispielhaft führt Task-Server 2 in einem Schritt 3 vermittels Netzwerk N3 ein Port-Knocking am zuvor ausgewählten Ziel-Server 1 durch, um dem Ziel-Server 1 zu signalisieren, dass Daten-Pakete in Task-Server 2 abholbereit sind. Ziel-Server 1 hält dabei sämtliche für das Verfahren maßgebliche Netzwerk-Ports für eine Ansprechbarkeit gegenüber Netzwerk N3 geschlossen. Allerdings kann Ziel-Server 1 in Schritt 4 über das Netzwerk N3 von sich aus eine Verbindung zum Task-Server 2 aufbauen und die Daten-Pakete zu sich abholen, wie verfahrensgemäß oben mehrfach erläutert. Eine weitere Verarbeitung der Daten-Pakete kann anschließend in einem letzten Schritt 5 im Ziel-Server 1 erfolgen. Auf diese Weise ist ein einfacher Datentransfer von einem externen Computersystem über einen Load Balancer zu einem Ziel-Server möglich. Eine VPN-Verbindung zwischen einem externen Computersystem und einem der Ziel-Server wird in diesem Ausführungsbeispiel nicht aufgebaut.
Die hier dargestellten Verfahren haben den Vorteil, dass ein Freischalten externer Computersysteme für eine Kommunikation mit einem abgesicherten Bearbeitungs-Computersystem oder einem abgesicherten Bearbeitungs-Load Balancer zur Lastverteilung auf eine Mehrzahl von Backend-Bearbeitungs-Computersystemen innerhalb einer Computernetz-Infrastruktur auf sichere Art und Weise möglich ist, ohne das Bearbeitungs-Computersystem oder den Bearbeitungs-Load Balancer (auch) für externe oder interne Angreifer zu öffnen.

### Bezugszeichenliste

- Task-Server: Vermittlungs-Computersystem
- Task-Serverl, 2: Vermittlungs-Computersystem
- Ziel-Server: Bearbeitungs-Computersystem
- Ziel-Serverl, 2: (Backend-) Bearbeitungs-Computersystem
- Load Balancer: Vermittlungs-Load Balancer
- Load Balancerl: Vermittlungs-Load Balancer
- Load Balancer2: Bearbeitungs-Load Balancer
- N, N1, N2, N3, N4: Netzwerk
- FW: Paket-Filter
- 1 bis 7: Verfahrensschritte

## Patentansprüche

1. Verfahren zum Freischalten externer Computersysteme für eine Kommunikation mit abgesicherten Bearbeitungs-Computersystemen (Ziel-Server) in einer Computernetz-Infrastruktur, umfassend die Schritte:
- Übertragen eines Authentifizierungs-Paketes von einem externen Computersystem, welches außerhalb der Computernetz-Infrastruktur eingerichtet ist, an ein Vermittlungs-Computersystem (Task-Server) innerhalb der Computernetz-Infrastruktur,
wobei das Authentifizierungs-Paket signierte Informationen zur Authentifizierung des externen Computersystems enthält,
- automatisiertes Übertragen des Authentifizierungs-Paketes vom Vermittlungs-Computersystem (Task-Server) an zumindest ein Bearbeitungs-Computersystem (Ziel-Server) innerhalb der Computernetz-Infrastruktur,
wobei das Bearbeitungs-Computersystem (Ziel-Server) über ein Netzwerk (N, N3) mit dem Vermittlungs-Computersystem (Task-Server) kommuniziert, wobei das Bearbeitungs-Computersystem (Ziel-Server) zumindest vorübergehend vorbestimmte Netzwerk-Ports geschlossen hält, so dass ein Zugriff auf das Bearbeitungs-Computersystem (Ziel-Server) über das Netzwerk (N, N3) vermittels dieser Netzwerk-Ports verhindert wird,
wobei jedoch das Bearbeitungs-Computersystem (Ziel-Server) über das Netzwerk (N, N3) auf das Vermittlungs-Computersystem (Task-Server) zugreift, um das Authentifizierungs-Paket vom Vermittlungs-Computersystem (Task-Server) abzuholen,
- Überprüfen des Authentifizierungs-Paketes im Bearbeitungs-Computersystem (Ziel-Server),
- Freischalten zumindest eines selektiven Netzwerk-Ports durch das Bearbeitungs-Computersystem (Ziel-Server) für eine Kommunikation mit dem externen Computersystem, falls das Überprüfen des Authentifizierungs-Paketes im Bearbeitungs-Computersystem (Ziel-Server) erfolgreich war,
- Aufbauen einer Verbindung zum selektiv freigeschalteten Netzwerk-Port des Bearbeitungs-Computersystems (Ziel-Server) durch das externe Computersystem.

2. Verfahren nach Anspruch 1, wobei nach dem Aufbauen einer Verbindung zum selektiv freigeschalteten Netzwerk-Port des Bearbeitungs-Computersystems (Ziel-Server) folgender zusätzlicher Schritt durchgeführt wird:
- Begrenzen der Kommunikation zwischen dem Bearbeitungs-Computersystem (Ziel-Server) und dem externen Computersystem auf den freigeschalteten Netzwerk-Port des Bearbeitungs-Computersystems (Ziel-Server) und einen Netzwerk-Port des externen Computersystems, der dem Bearbeitungs-Computersystem (Ziel-Server) durch die aufgebaute Verbindung bekannt ist.

3. Verfahren nach Anspruch 1 oder 2, wobei nach dem Aufbauen einer Verbindung zum selektiv freigeschalteten Netzwerk-Port des Bearbeitungs-Computersystems (Ziel-Server) durch das externe Computersystem folgende Schritte durchgeführt werden:
- Übertragen eines Verifikations-Paketes durch das externe Computersystem unmittelbar auf das Bearbeitungs-Computersystem (Ziel-Server) vermittels der aufgebauten Verbindung und
- Bestätigen der Informationen des durch das Vermittlungs-Computersystem (Task-Server) zuvor übertragenen Authentifizierungs-Paketes durch Verifikations-Informationen im Verifikations-Paket.

4. Verfahren nach einem der Ansprüche 1 bis 3, umfassend die zusätzlichen Schritte:
- Überprüfen des Authentifizierungs-Paketes im Vermittlungs-Computersystem (Task-Server) und
- Verwerfen des Authentifizierungs-Paketes durch das Vermittlungs-Computersystem (Task-Server), falls das Überprüfen nicht erfolgreich war.

5. Verfahren nach einem der Ansprüche 1 bis 4, wobei das Übertragen des Authentifizierungs-Paketes vom Vermittlungs-Computersystem (Task-Server) auf das Bearbeitungs-Computersystem (Ziel-Server) die folgenden Schritte umfasst:
- Senden einer vorbestimmten Daten-Sequenz vom Vermittlungs-Computersystem (Task-Server) oder vom externen Computersystem an das Bearbeitungs-Computersystem (Ziel-Server), wobei die vorbestimmten Netzwerk-Ports des Bearbeitungs-Computersystems (Ziel-Server) geschlossen sind und wobei die Sequenz in einer vorbestimmten Reihenfolge einen oder mehrere Netzwerk-Ports des Bearbeitungs-Computersystems (Ziel-Server) anspricht,
- Überprüfen der gesendeten Daten-Sequenz auf Übereinstimmung mit einer vordefinierten Sequenz im Bearbeitungs-Computersystem (Ziel-Server), sowie
- Veranlassen des Übertragens des Authentifizierungs-Paketes durch das Bearbeitungs-Computersystem (Ziel-Server), falls die Überprüfung der gesendeten Sequenz positiv ist.

6. Verfahren nach einem der Ansprüche 1 bis 5, wobei Daten-Pakete zwischen dem externen Computersystem und der Computernetz-Infrastruktur über einen Paket-Filter geleitet werden,
wobei der Paket-Filter zum externen Computersystem hin zumindest einen Netzwerk-Port für einen Zugriff durch das externe Computersystem offen hält und wobei der Paket-Filter zur Computernetz-Infrastruktur hin vorbestimmte Netzwerk-Ports geschlossen hält, so dass zumindest ein Zugriff von einem Bearbeitungs-Computersystem (Ziel-Server) innerhalb der Computernetz-Infrastruktur auf das externe Computersystem verhindert wird.

7. Verfahren nach einem der Ansprüche 1 bis 6, wobei Daten-Pakete zwischen dem Vermittlungs-Computersystem (Task-Server) und dem Bearbeitungs-Computersystem (Ziel-Server) innerhalb der Computernetz-Infrastruktur über einen Paket-Filter (FW) geleitet werden,
wobei der Paket-Filter (FW) in der Kommunikationsrichtung vom Vermittlungs-Computersystem (Task-Server) hin zum Bearbeitungs-Computersystem (Ziel-Server) nur Daten-Pakete weiterleitet, welche die IP-Adresse des Vermittlungs-Computersystems (Task-Server) enthalten und einer bereits hergestellten Verbindung zwischen dem Vermittlungs-Computersystem (Task-Server) und dem Bearbeitungs-Computersystem (Ziel-Server) zugeordnet werden können.

8. Verfahren nach einem der Ansprüche 1 bis 7, wobei das Übertragen des Authentifizierungs-Paketes vom externen Computersystem an das Vermittlungs-Computersystem (Task-Server) folgende Teilschritte umfasst:
- Aufbauen einer Verbindung vom externen Computersystem zu einem Vermittlungs-Load Balancer (Load Balancer, Load Balancer1), der einer Mehrzahl von Vermittlungs-Computersystemen (Task-Serverl, Task-Server2) vorgeschaltet ist,
- Auswahl des Vermittlungs-Computersystems (Task-Serverl, Task-Server2) aus der Mehrzahl von Vermittlungs-Computersystemen (Task-Serverl, Task-Server2) durch den Vermittlungs-Load Balancer (Load Balancer, Load Balancer1), und
- Weiterleiten des Authentifizierungs-Paketes vom externen Computersystem über den Vermittlungs-Load Balancer (Load Balancer, Load Balancer1) an das ausgewählte Vermittlungs-Computersystem (Task-Serverl, Task-Server2).

9. Verfahren nach einem der Ansprüche 1 bis 8, wobei das Bearbeitungs-Computersystem (Ziel-Server) als Bearbeitungs-Load Balancer (Load Balancer2) arbeitet, der einer Mehrzahl von Backend-Bearbeitungs-Computersystemen (Ziel-Serverl, Ziel-Server2) vorgeschaltet ist und folgende Maßnahmen durchführt:
- Auswahl eines Backend-Bearbeitungs-Computersystems (Ziel-Server1, Ziel-Server2) aus der Mehrzahl der Backend-Bearbeitungs-Computersysteme (Ziel-Serverl, Ziel-Server2), und
- Weiterleiten einer durch das externe Computersystem zum selektiv freigeschalteten Netzwerk-Port des Bearbeitungs-Load Balancers (Load Balancer2) aufgebauten Verbindung an das ausgewählte Backend-Bearbeitungs-Computersystem (Ziel-Server1, Ziel-Server2).

10. Verteiltes Rechnernetz mit
- einer Computernetz-Infrastruktur, welche zumindest ein Vermittlungs-Computersystem (Task-Server) und ein Bearbeitungs-Computersystem (Ziel-Server) umfasst, und
- zumindest einem externen Computersystem, welches sich außerhalb der Computernetz-Infrastruktur befindet,
wobei das externe Computersystem eingerichtet ist, ein Authentifizierungs-Paket an das Vermittlungs-Computersystem (Task-Server) zu übertragen zur Authentifizierung für eine Kommunikation mit dem Bearbeitungs-Computersystem (Ziel-Server),
wobei das Vermittlungs-Computersystem (Task-Server) und das Bearbeitungs-Computersystem (Ziel-Server) eingerichtet sind, über ein Netzwerk (N, N3) miteinander zu kommunizieren, wobei das Vermittlungs-Computersystem (Task-Server) eingerichtet ist, das Authentifizierungs-Paket automatisiert über das Netzwerk (N, N3) an das Bearbeitungs-Computersystem (Ziel-Server) zu übertragen,
wobei das Bearbeitungs-Computersystem (Ziel-Server) eingerichtet ist das übertragene Authentifizierungs-Paket zu überprüfen und
wobei das Bearbeitungs-Computersystem (Ziel-Server) eine Zugriffssteuereinheit aufweist, die eingerichtet ist, zumindest vorübergehend vorbestimmte Netzwerk-Ports geschlossen zu halten, so dass ein Zugriff auf das Bearbeitungs-Computersystem (Ziel-Server) über das Netzwerk (N, N3) vermittels dieser Netzwerk-Ports verhindert ist, jedoch ein Zugriff des Bearbeitungs-Computersystems (Ziel-Server) auf das Vermittlungs-Computersystem (Task-Server) über das Netzwerk (N, N3) erlaubt ist, um das Authentifizierungs-Paket vom Vermittlungs-Computersystem (Task-Server) abzuholen,
wobei die Zugriffssteuereinheit ferner eingerichtet ist, nach einer erfolgreichen Authentifizierung des externen Computersystems am Bearbeitungs-Computersystem (Ziel-Server) oder an einem dem Bearbeitungs-Computersystem nachgeschalteten Backend-Bearbeitungs-Computersystem (Ziel-Server1, Ziel-Server2) zumindest einen selektiven Netzwerk-Port für eine Kommunikation mit dem externen Computersystem freizuschalten.

11. Verteiltes Rechnernetz nach Anspruch 10, wobei die Computernetz-Infrastruktur eine Mehrzahl von Vermittlungs-Computersystemen (Task-Serverl, Task-Server2) sowie einen Vermittlungs-Load Balancer (Load Balancer, Load Balancer1) umfasst, der der Mehrzahl der Vermittlungs-Computersysteme (Task-Serverl, Task-Server2) vorgeschaltet ist.

12. Verteiltes Rechnernetz nach Anspruch 10 oder 11, wobei das Bearbeitungs-Computersystem als Bearbeitungs-Load Balancer (Load Balancer2) eingerichtet ist und die Computernetz-Infrastruktur weiterhin eine Mehrzahl von Backend-Bearbeitungs-Computersystemen (Ziel-Serverl, Ziel-Server2) umfasst, denen der Bearbeitungs-Load Balancer (Load Balancer2) vorgeschaltet ist.

13. Computerprogramm-Produkt, welches eingerichtet ist, auf mehreren Computersystemen ausgeführt zu werden und welches bei Ausführung ein Verfahren nach einem der Ansprüche 1 bis 9 durchführt.

## Claims

1. Method for unblocking external computer systems for communication with secured processing computer systems (target server) in a computer network infrastructure, comprising the steps:
- transmitting an authentication packet from an external computer system, which is configured outside the computer network infrastructure, to a broker computer system (task server) within the computer network infrastructure,
wherein the authentication packet contains signed information for authentication of the external computer system,
- automatedly transmitting the authentication packet from the broker computer system (task server) to at least one processing computer system (target server) within the computer network infrastructure,
wherein the processing computer system (target server) communicates, via a network (N, N3), with the broker computer system (task server), wherein the processing computer system (target server) keeps predetermined network ports at least temporarily closed, so that any access to the processing computer system (target server) via the network (N, N3) is prevented by means of these network ports,
wherein, however, the processing computer system (target server) accesses the broker computer system (task server) via the network (N, N3) in order to fetch the authentication packet from the broker computer system (task server),
- verifying the authentication packet in the processing computer system (target server),
- unblocking at least one selective network port by the processing computer system (target server) for communication with the external computer system, if the verification of the authentication packet in the processing computer system (target server) was successful,
- establishing a connection to the selectively unblocked network port of the processing computer system (target server) by the external computer system.

2. Method according to claim 1, wherein, after establishing a connection to the selectively unblocked network port of the processing computer system (target server), the following additional step is carried out:
- restricting communication between the processing computer system (target server) and the external computer system to the unblocked network port of the processing computer system (target server) and a network port of the external computer system, which is known to the processing computer system (target server) by the established connection.

3. Method according to claim 1 or 2, wherein after establishing a connection to the selectively unblocked network port of the processing computer system (target server) by the external computer system, the following steps are carried out:
- transmitting a verification packet by the external computer system directly to the processing computer system (target server) by means of the established connection, and
- confirming the information of the authentication packet previously transmitted by the broker computer system (task server) by means of verification information in the verification packet.

4. Method according to one of claims 1 to 3, comprising the additional steps of:
- verifying the authentication packet in the broker computer system (task server), and
- discarding the authentication packet by the broker computer system (task server) if the verification was not successful.

5. Method according to one of claims 1 to 4, wherein the transmission of the authentication packet from the broker computer system (task server) to the processing computer system (target server) comprises the following steps:
- sending a predetermined data sequence from the broker computer system (task server) or from the external computer system to the processing computer system (target server), wherein the predetermined network ports of the processing computer system (target server) are closed and wherein the sequence addresses one or multiple network ports of the processing computer system (target server) in a predetermined order,
- verifying the sent data sequence for conformance with a predetermined sequence in the processing computer system (target server), as well as
- causing the transmission of the authentication packet by the processing computer system (target server) if the verification of the sent sequence is positive.

6. Method according to one of claims 1 to 5, wherein data packets are routed, via a packet filter, between the external computer system and the computer network infrastructure, wherein the packet filter keeps at least one network port toward the external computer system open for access by the external computer system, and wherein the packet filter keeps predetermined network ports toward the computer network infrastructure closed so that at least access from a processing computer system (target server) within the computer network infrastructure to the external computer system is prevented.

7. The method according to one of claims 1 to 6, wherein data packets are routed via a packet filter (FW) between the broker computer system (task server) and the processing computer system (target server) within the computer network infrastructure,
wherein the packet filter (FW), in the communication direction from the broker computer system (task server) toward the processing computer system (target server), only forwards data packets which contain the IP-address of the broker computer system (task server) and which can be assigned to an already established connection between the broker computer system (task server) and the processing computer system (target server).

8. Method according to one of claims 1 to 7, wherein the transmission of the authentication packet from the external computer system to the broker computer system (Task-Server) comprises the following sub-steps:
- establishing a connection from the external computer system to a broker load balancer (load Balancer, load Balancer 1), which is connected upstream of a plurality of broker computer systems (Task-Serverl, Task-Server2),
- selection of the broker computer system (Task-Serverl, Task-Server2) from the plurality of broker computer systems (Task-Serverl, Task-Server2) by the broker load balancer (load balancer, load balancer1), and
- forwarding the authentication packet from the external computer system to the selected broker computer system (task server1, task server2) via the broker load balancer (load balancer, load balancer 1).

9. Method according to one of claims 1 to 8, wherein the processing computer system (target server) operates as processing load balancer (load Balancer2), which is connected upstream of a plurality of backend processing computer systems (target-serverl, target-server2) and performs the following measures:
- selection of a backend processing computer system (target-serverl, target-server2) from the plurality of backend processing computer systems (target-serverl, target-server2), and
- forwarding a connection, established by the external computer system to the selectively unblocked network port of the processing load balancer (load balancer2), to the selected backend processing computer system (target-serverl, target-server2) .

10. Distributed computer network, comprising
- a computer network infrastructure, which includes at least one broker computer system (task server) and a processing computer system (target server), and
- at least one external computer system, which is located outside the computer network infrastructure,
wherein the external computer system is configured to transmit an authentication packet to the broker computer system (task server) for the authentication for communication with the processing computer system (target server),
wherein the broker computer system (task server) and the processing computer system (target server) are configured to communicate with each other via a network (N, N3),
wherein the broker computer system (task server) is configured to automatically transmit the authentication packet to the processing computer system (target server) via the network (N, N3),
wherein the processing computer system (target server) is configured to verify the transmitted authentication packet, and
wherein the processing computer system (target server) comprises an access control unit, which is configured to keep predetermined network ports at least temporarily closed, so that any access to the processing computer system (target server) via the network (N, N3) is prevented by means of these network ports, but access of the processing computer system (target server) via the network (N, N3) to the broker computer system (task server) is permitted, in order to fetch the authentication packet from the broker computer system (task server),
wherein the access control unit is further configured to unblock at least one selective network port for communication with the external computer system after a successful authentication of the external computer system at the processing computer system (target server) or at a backend processing computer system (target-serverl, target-server2) connected downstream of the processing computer system.

11. Distributed computer network according to claim 10, wherein the computer network infrastructure comprises a plurality of broker computer systems (task server1, task server2) as well as a broker load balancer (load balancer, load balancer1), which is connected upstream of the plurality of broker computer systems (task server1, task server2).

12. Distributed computer network according to claim 10 or 11, wherein the processing computer system is configured as a processing load balancer (load balancer2) and the computer network infrastructure further comprises a plurality of backend processing computer systems (target-serverl, target-server2) with the processing load balancer (load balancer2) connected upstream thereof.

13. Computer program product, which is configured to be executed on multiple computer systems and which, when executed, carries out a method according to one of claims 1 to 9.

## Revendications

1. Procédé de libération des systèmes informatiques externes pour une communication avec des systèmes informatiques de traitement sécurisés (serveurs cibles) dans une infrastructure de réseau informatique, comprenant les étapes :
- de transmission d'un paquet d'authentification depuis un système informatique externe, lequel est configuré à l'extérieur de l'infrastructure de réseau informatique, à un système informatique de commutation (serveur de tâches) à l'intérieur de l'infrastructure de réseau informatique,
dans lequel le paquet d'authentification contient des informations signées pour authentifier le système informatique externe,
- de transmission automatisée du paquet d'authentification depuis le système informatique de commutation (serveur des tâches) à au moins un système informatique de traitement (serveur cible) au sein de l'infrastructure de réseau informatique,
dans lequel le système informatique de traitement (serveur cible) communique par l'intermédiaire d'un réseau (N, N3) avec le système informatique de commutation (serveur de tâches),
dans lequel le système informatique de traitement (serveur cible) maintient fermés au moins provisoirement des ports de réseau prédéfinis de sorte qu'un accès au système informatique de traitement (serveur cible) par l'intermédiaire du réseau (N, N3) au moyen desdits ports de réseau est empêché,
dans lequel toutefois le système informatique de traitement (serveur cible) a accès au système informatique de commutation (serveur de tâches) par l'intermédiaire du réseau (N, N3) afin de récupérer le paquet d'authentification du système informatique de commutation (serveur de tâches),
- de vérification du paquet d'authentification dans le système informatique de traitement (serveur cible),
- de libération d'au moins un port de réseau sélectif par le système informatique de traitement (serveur cible) en vue d'une communication avec le système informatique externe, si la vérification du paquet d'authentification a été réalisée avec succès dans le système informatique de traitement (serveur cible),
- d'établissement d'une liaison avec le port de réseau libéré de manière sélective du système informatique de traitement (serveur cible) par le système informatique externe.

2. Procédé selon la revendication 1, dans lequel après l'établissement d'une liaison avec le port de réseau libéré de manière sélective du système informatique de traitement (serveur cible),l'étape supplémentaire suivante est réalisée :
- la limitation de la communication entre le système informatique de traitement (serveur cible) et le système informatique externe sur le port de réseau libéré du système informatique de traitement (serveur cible) et un port de réseau du système informatique externe, qui est connu du système informatique de traitement (serveur cible) par la liaison établie.

3. Procédé selon la revendication 1 ou 2, dans lequel après l'établissement d'une liaison avec le port de réseau libéré de manière sélective du système informatique de traitement (serveur cible) par le système informatique externe, des étapes suivantes sont réalisées :
- la transmission d'un paquet de vérification par le système informatique externe directement sur le système informatique de traitement (serveur cible) au moyen de la liaison établie, et
- la confirmation des informations du paquet d'authentification transmis au préalable par le système information de commutation (serveur de tâches) par des informations de vérification dans le paquet de vérification.

4. Procédé selon l'une quelconque des revendications 1 à 3, comprenant les étapes supplémentaires :
- de vérification du paquet d'authentification dans le système informatique de commutation (serveur de tâches), et
- de rejet du paquet d'authentification par le système informatique de commutation (serveur de tâches), si la vérification n'a pas été réalisée avec succès.

5. Procédé selon l'une quelconque des revendications 1 à 4, dans lequel la transmission du paquet d'authentification par le système informatique de commutation (serveur de tâches) sur le système informatique de traitement (serveur cible) comprend les étapes suivantes :
- l'envoi d'une séquence de données prédéfinie á partir du système informatique de commutation (serveur de tâches) ou á partir du système informatique externe au système informatique de traitement (serveur cible), dans lequel les ports de réseau prédéfinis du système informatique de traitement (serveur cible) sont fermés et dans lequel la séquence dans un ordre prédéfini adresse un ou plusieurs ports de réseau du système informatique de traitement (serveur cible),
- la vérification de la séquence de données envoyée en accord avec une séquence prédéfinie dans le système informatique de traitement (serveur de tâches), ainsi que
- l'entraînement de la transmission du paquet d'authentification par le système informatique de traitement (serveur cible) si la vérification de la séquence envoyée est positive.

6. Procédé selon l'une quelconque des revendications 1 à 5, dans lequel des paquets de données sont acheminés entre le système informatique externe et l'infrastructure de réseau informatique en passant par un filtre de paquet,
dans lequel le filtre de paquet maintient ouvert vers le système informatique externe au moins un port de réseau pour un accès par le système informatique externe et dans lequel le filtre de paquet maintient fermés vers l'infrastructure de réseau informatique des ports de réseau prédéfinis de sorte qu'au moins un accès par un système informatique de traitement (serveur cible) à l'intérieur de l'infrastructure de réseau informatique au système informatique externe est empêché.

7. Procédé selon l'une quelconque des revendications 1 à 6, dans lequel des paquets de données sont acheminés entre le système informatique de commutation (serveur de tâches) et le système informatique de traitement (serveur cible) à l'intérieur de l'infrastructure de réseau informatique par l'intermédiaire d'un filtre de paquet (FW),
dans lequel le filtre de paquet (FW) transfère seulement des paquets de données dans le sens de communication depuis le système informatique de commutation (serveur de tâches) vers le système informatique de traitement (serveur cible), lesquels contiennent l'adresse IP du système informatique de commutation (serveur de tâches) et peuvent être associés à une liaison déjà générée entre le système informatique de commutation (serveur de tâches) et le système informatique de traitement (serveur cible).

8. Procédé selon l'une quelconque des revendications 1 à 7, dans lequel la transmission du paquet d'authentification depuis le système informatique externe au système informatique de commutation (serveur de tâches) comprend des étapes partielles suivantes :
- l'établissement d'une liaison depuis le système informatique externe vers un système d'équilibrage de charge de commutation (Load Balancer, Load Balancer1), qui est installé en amont d'une multitude de systèmes informatiques de commutation (Task-server1, Task-Server2),
- la sélection du système informatique de commutation (Task-Server1, Task-server2) parmi la multitude de systèmes informatiques de commutation (Task-server1, Task-Server2) par le système d'équilibrage de charge de commutation (Load Balancer, Load Balancer1), et
- le transfert du paquet d'authentification depuis le système informatique externe au système informatique de commutation (Task-Server1, Task-Server2) sélectionné en passant par le système d'équilibrage de charge de commutation (Load Balancer, Load Balancer 1).

9. Procédé selon l'une quelconque des revendications 1 à 8, dans lequel le système informatique de traitement (serveur cible) fonctionne en tant que système d'équilibrage de charge de traitement (Load Balancer2), qui est installé en amont d'une multitude de systèmes informatiques de traitement backend (serveur cible 1, serveur cible2) et met en oeuvre des mesures suivantes :
- la sélection d'un système informatique de traitement backend (serveur cible1, serveur cible2) parmi la multitude de systèmes informatiques de traitement backend (serveur cible1, serveur cible 2), et
- le transfert d'une liaison établie par le système informatique externe avec le port de réseau libéré de manière sélective du système d'équilibrage de charge de traitement (Load Balancer 2) au système informatique de traitement backend sélectionné (serveur cible1, serveur cible2).

10. Réseau d'ordinateurs répartis avec
- une infrastructure de réseau informatique, qui comprend au moins un système informatique de commutation (serveur de tâches) et un système informatique de traitement (serveur cible), et
- au moins un système informatique externe, qui se trouve à l'extérieur de l'infrastructure de réseau informatique,
dans lequel le système informatique externe est mis au point pour transmettre un paquet d'authentification au système informatique de commutation (serveur de tâches) aux fins de l'authentification en vue d'une communication avec le système informatique de traitement (serveur cible),
dans lequel le système informatique de commutation (serveur de tâches) et le système informatique de traitement (serveur cible) sont configurés pour communiquer entre eux par l'intermédiaire d'un réseau (N, N3),
dans lequel le système informatique de commutation (serveur de tâches) est configuré pour transmettre le paquet d'authentification de manière automatisée par l'intermédiaire du réseau (N, N3) au système informatique de traitement (serveur cible),
dans lequel le système informatique de traitement (serveur cible) est configuré pour vérifier le paquet d'authentification transmis, et
dans lequel le système informatique de traitement (serveur cible) présente une unité de commande d'accès, qui est configurée pour maintenir fermés au moins temporairement des ports de réseau prédéfinis, de sorte qu'un accès au système informatique de traitement (serveur cible) par l'intermédiaire du réseau (N, N3) est empêché au moyen desdits ports de réseau,
toutefois un accès du système informatique de traitement (serveur cible) au système informatique de commutation (serveur de tâches) est permis par l'intermédiaire du réseau (N, N3) afin de récupérer le paquet d'authentification du système informatique de commutation (serveur de tâches),
dans lequel l'unité de commande d'accès est en outre configurée pour libérer, après une authentification réalisée avec succès du système informatique externe au niveau du système informatique de traitement (serveur cible) ou au niveau d'un système informatique de traitement backend installé en aval du système informatique de traitement (serveur cible1, serveur cible2), au moins un port de réseau sélectif en vue d'une communication avec le système informatique externe.

11. Réseau d'ordinateurs distribué selon la revendication 10, dans lequel l'infrastructure de réseau informatique comprend une multitude de systèmes informatiques de commutation (serveur de tâche1, serveur de tâche2) ainsi qu'un système d'équilibrage de tâches de commutation (Load Balancer, Load Balancer1), qui est installé en amont de la multitude des systèmes informatiques de commutation (serveur de tâche1, serveur de tâche2).

12. Réseau d'ordinateurs distribué selon la revendication 10 ou 11, dans lequel le système informatique de traitement est configuré en tant que système d'équilibrage de charge de traitement (Load Balancer2) et l'infrastructure de réseau informatique comprend par ailleurs une multitude de systèmes informatiques de traitement backend (serveur cible1, serveur cible2), en amont desquels le système d'équilibrage de charge de traitement (Load Balancer2) est installé.

13. Produit-programme informatique, qui est configuré pour être exécuté sur plusieurs systèmes informatiques et qui met en oeuvre lors de l'exécution un procédé selon l'une quelconque des revendications 1 à 9.
